# EUROPÄISCHE PATENTANMELDUNG

(11) **EP 1 524 282 A1**
(43) Veröffentlichungstag der Anmeldung: **20.04.2005**
(21) Anmeldenummer: 03023340.7
(22) Anmeldetag: 15.10.2003
(51) Int. Cl.: C08G 18/12, C08G 18/48

(54) **Zweikomponentige Polyurethanzusammensetzung mit hoher Frühfestigkeit**

(71) Anmelder: Sika Technology AG, 6340 Baar (CH)
(72) Erfinder: Burckhardt, Urs, 8057 Zürich (CH); Kislig, Stefan, 8967 Widen (CH)
(74) Vertreter: Isler, Jörg

(57) **Zusammenfassung**

Die vorliegende Erfindung betrifft eine zweikomponentige Zusammensetzung, bei welcher die erste Komponente **A** mindestens ein Polyurethanprepolymer **A1** mit Isocyanatendgruppen enthält, hergestellt aus mindestens einem Polyisocyanat und mindestens einem Polyol, und bei welcher die zweite Komponente **B** Wasser und mindestens ein Polyaldimin **B1** enthält, welches erhältlich ist aus mindestens einem Polyamin **PA** mit aliphatischen primären Aminogruppen und mindestens einem Aldehyd **ALD** nach Formel (I) oder Formel (II).

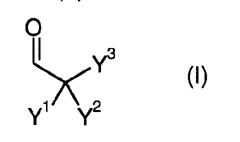

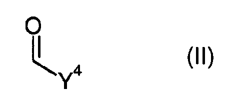

Die Zusammensetzung zeichnet sich dadurch aus, dass sie eine lange Verarbeitungszeit und eine hohe Frühfestigkeit aufweist, schnell aushärtet und dennoch keine Blasen bildet und insbesondere sowohl vor, als auch während und nach dem Aushärten keinen oder nur einen geringen Geruch aufweist.

## Beschreibung

### Technisches Gebiet

Die Erfindung betrifft zweikomponentige Polyurethanzusammensetzungen, geeignet als pastöse Klebstoffe, Dichtstoffe und Beschichtungen, mit einer langen Verarbeitungszeit, einer hohen Frühfestigkeit, einer raschen und blasenfreien Aushärtung, einer guten Haftung und einer geringen Geruchsbildung bei der Aushärtung, bestehend aus einer ersten Komponente A mit Isocyanatgruppen und einer zweiten Komponente B, welche Wasser und mindestens ein Polyaldimin enthält.

### Stand der Technik

Polyurethanzusammensetzungen werden unter anderem eingesetzt für verschiedenartige Verklebungen, Abdichtungen und Beschichtungen. Speziell geeignet sind sie für Verklebungen oder Abdichtungen, welche eine Elastizität der Klebeverbindung erfordern. Polyurethanzusammensetzungen für elastische Verklebungen sind üblicherweise pastöse Massen und werden als einkomponentige oder zweikomponentige Systeme eingesetzt.
Ein praxistauglicher Klebstoff muss über einige besondere Eigenschaften verfügen. Einerseits muss er eine genügend lange Verarbeitungszeit (Topfzeit und Offenzeit) gewährleisten, damit der Anwender genug Zeit hat, den Klebstoff an den gewünschten Stellen aufzutragen, dann die zu verklebenden Bauteile anzubringen und diese korrekt zu positionieren. Andererseits soll der Festigkeitsaufbau des Klebstoffs rasch erfolgen, da es für gewisse Anwendungen erforderlich ist, dass die Klebeverbindung schon kurz nach der Applikation einer mechanischen Belastung ausgesetzt werden darf, beispielsweise weil die verklebten Bauteile an einen andern Ort transportiert werden sollen, oder weil eine allfällige Fixierung entfernt werden soll. Um solche frühzeitigen Belastungen der Klebeverbindung zu ermöglichen, muss der Klebstoff eine hohe Frühfestigkeit aufweisen; das heisst, die Klebeverbindung ist bis zu einem gewissen Grad belastbar, noch bevor die Aushärtung vollständig erfolgt ist. Dies bedingt auch, dass der Klebstoff, parallel zum raschen Festigkeitsaufbau, ebenfalls rasch eine gute Haftung zu den verklebten Bauteilen aufbaut, denn nur dann ist die Klebeverbindung belastbar. Anschliessend soll der Klebstoff rasch und ohne die Bildung von Blasen zu seiner Endfestigkeit aushärten, so dass die elastische Klebeverbindung möglichst bald voll belastet werden kann. Des weiteren darf ein praxistauglicher Klebstoff keine starken oder unangenehmen Geruchsimmissionen verursachen. Insbesondere bei Klebeanwendungen im Innern von geschlossenen Räumen, beispielsweise im Innenbereich von Bauwerken oder Fahrzeugen, ist höchstens ein geringer Geruch der eingesetzten Materialien tolerierbar, da der Gebrauch des fertig verarbeiteten Objektes innerhalb einer vernünftigen Zeit aufgrund zu starker Geruchsimmissionen erschwert bis verunmöglicht wird.
Einkomponentige Polyurethanklebstoffe sind im allgemeinen nicht geeignet für Anwendungen, die eine hohe Frühfestigkeit der Klebeverbindung voraussetzen. Bedingt durch den Aushärtungsprozess mittels Feuchtigkeit aus der Luft ist die Aushärtung und damit der Festigkeitsaufbau des einkomponentigen Klebstoffs zu langsam, weil die zur Härtungsreaktion erforderliche Feuchtigkeit von aussen durch die - zunehmend dicker werdenden - Schichten des ausgehärteten Materials hindurchdiffundieren muss. Zudem neigen schnell aushärtende einkomponentige Polyurethanklebstoffe oft zur Bildung von Blasen während der Aushärtung, was die Belastbarkeit der Klebeverbindung erheblich stört.
Wesentlich kürzere Aushärtezeiten werden mit zweikomponentigen Polyurethanklebstoffen erreicht. Die Schwierigkeit besteht dort aber darin, eine Zusammensetzung zu finden, welche nach dem Vermischen der beiden Komponenten zuerst eine relativ lange Verarbeitungszeit aufweist, dann aber eine hohe Frühfestigkeit aufbaut und rasch aushärtet. Eine rasche Aushärtung kann erreichen werden, indem eine isocyanathaltige Komponente mit einer polyaminhaltigen Komponente ausgehärtet wird. Diese Reaktion ist jedoch üblicherweise so schnell, dass eine handhabbare Verarbeitungszeit schwierig zu erreichen ist. Um die hohe Reaktivität der Polyamine mit den Isocyanatgruppen etwas zu bremsen, gibt es verschiedene Ansatzpunkte. Es können beispielsweise spezielle Amine eingesetzt werden, beispielsweise mit aromatischen und/oder sterisch gehinderten und/oder sekundären Aminogruppen. Solche spezielle Amine weisen jedoch Nachteile auf. Die aromatischen Amine beispielsweise sind toxikologisch nicht unbedenklich, und sterisch gehinderte Amine oder Amine mit sekundären Aminogruppen sind im allgemeinen teuer, führen teilweise zu Produkten mit verminderten mechanischen Eigenschaften und sind oft immer noch zu reaktiv, insbesondere in Kombination mit den reaktiven aromatischen Isocyanatgruppen.
Eine weitere Möglichkeit der Verlangsamung ist die Zugabe von Polyaldiminen zu Polyaminen in der Härterkomponente, wie sie in US 4,108,842 oder in US 4,895,883 beschrieben sind.
US 3,932,357 beschreibt eine weitere Verlangsamung, indem ein Dialdimin als Härterkomponente eingesetzt wird.
Schliesslich sind in US 3,420,800 Polyurethane beschrieben, welche Polyisocyanate und Bis-Aldimine enthalten und durch Wasser ausgehärtet werden.
In all diesen Patentschriften werden vorwiegend Aldehyde verwendet, welche einen intensiven Geruch bei der Applikation der jeweiligen Systeme verursachen.
Zweikomponentige Polyurethanzusammensetzungen mit einer langen Verarbeitungszeit, einer hohen Frühfestigkeit, einer raschen und blasenfreien Aushärtung, einer guten Haftung und einer geringen Geruchsbildung bei der Aushärtung, bestehend aus einer ersten Komponente **A** mit Isocyanatgruppen und einer zweiten Komponente **B,** welche Wasser und mindestens ein Polyaldimin enthält, sind bisher nicht bekannt.

### Darstellung der Erfindung

Aufgabe der vorliegenden Erfindung ist es, eine zweikomponentige Polyurethanzusammensetzung zur Verfügung zu stellen, welche eine lange Verarbeitungszeit, eine hohe Frühfestigkeit, eine rasche und blasenfreie Aushärtung, eine gute Haftung und eine geringe Geruchsbildung bei der Aushärtung aufweist.

Überraschenderweise wurde gefunden, dass dies durch eine zweikomponentige Polyurethanzusammensetzung erreicht werden kann, bei welcher die erste Komponente **A** mindestens ein Polyurethanprepolymer mit Isocyanatendgruppen enthält, welches aus mindestens einem Polyisocyanat und mindestens einem Polyol hergestellt wird, und bei welcher die zweite Komponente **B** Wasser und mindestens ein Polyaldimin enthält, welches erhältlich ist aus mindestens einem Polyamin mit aliphatischen primären Aminogruppen und mindestens einem Aldehyd, wobei dieser Aldehyd geruchsarm ist.
Mit einer solchen zweikomponentigen Polyurethanzusammensetzung können beispielsweise pastöse Klebstoffe für elastische Verklebungen und Abdichtungen formuliert werden, welche eine lange Verarbeitungszeit, eine hohe Frühfestigkeit, eine rasche und blasenfreie Aushärtung, eine gute Haftung und eine geringe Geruchsbildung bei der Aushärtung aufweisen.
Eine solche zweikomponentige Polyurethanzusammensetzung weist eine weitere interessante Eigenschaft auf. Mit der gleichen ersten Komponente **A** können allein durch Variation der zweiten Komponente **B** mit wenig Aufwand Klebstoffe mit unterschiedlichen mechanischen Eigenschaften erhalten werden, nämlich indem das für die Herstellung des Polyaldimins in der zweiten Komponente **B** verwendete Polyamin den jeweiligen Bedürfnissen angepasst wird. Für den Klebstoffhersteller ist dieser Vorteil von entscheidender Bedeutung. Dadurch, dass die erste Komponente **A** für unterschiedliche Klebstoffe mit unterschiedlichen mechanischen Eigenschaften gleich bleibt, entfällt ein grosser Aufwand für die Herstellung und Verpackung einer Vielzahl von ersten Komponenten **A**, deren Handhabung aufgrund der hohen Empfindlichkeit gegenüber Feuchtigkeit viel aufwändiger ist, als dies bei der zweiten Komponente B der Fall ist. Mit der beschriebenen Polyurethanzusammensetzung können mit wenig Aufwand veränderte oder neue Anforderungen in Bezug auf Aushärtungsgeschwindigkeit, Zugfestigkeit, Bruchdehnung und Elastizitätsmodul abgedeckt werden, indem eine bereits vorhandene erste Komponente **A** mit einer für die neuen Anforderungen optimierten zweiten Komponente **B** kombiniert wird.
Durch die Verwendung spezieller Polyaldimine in der zweiten Komponente **B**, erhältlich aus mindestens einem Polyamin mit aliphatischen primären Aminogruppen und mindestens einem geruchsarmen Aldehyd, werden Polyurethanzusammensetzungen mit einer geringen Geruchsbildung während und nach der Aushärtung erhalten. Dadurch sind die beschriebenen Polyurethanzusammensetzungen auch geeignet für Anwendungen in geschlossenen Räumen, wie beispielsweise im Innenbereich von Bauwerken oder Fahrzeugen.
Durch die Kombination von Polyaldimin und Wasser in der zweiten Komponente **B** wird ein optimales Reaktivitätsverhalten zusammen mit der ersten Komponente **A** erreicht. Auf diese Weise werden Polyurethanzusammensetzungen erhalten, die sich durch eine lange Verarbeitungszeit, eine hohe Frühfestigkeit und eine rasche, blasenfreie Aushärtung auszeichnen.
Mit Hilfe der vorliegenden Erfindung ist es zusätzlich möglich, ein baukastenartig (modular) aufgebautes zweikomponentiges Produktesystem zu formulieren, welches aus einer universellen ersten Komponente **A** und einer Palette von verschiedenen zweiten Komponenten **B** besteht. Mit einem solchen System können auf einfache Weise Polyurethanzusammensetzungen mit unterschiedlich langen Verarbeitungszeiten, Frühfestigkeiten, Aushärtegeschwindigkeiten, unterschiedlich ausgeprägter Geruchsbildung bei der Aushärtung und unterschiedlichen mechanischen Eigenschaften erhalten werden.

### Weg zur Ausführung der Erfindung

Die vorliegende Erfindung betrifft eine zweikomponentige Polyurethanzusammensetzung, bestehend aus einer ersten Komponente **A**, welche mindestens ein Polyurethanprepolymer **A1** mit Isocyanatendgruppen enthält, hergestellt aus mindestens einem Polyisocyanat und mindestens einem Polyol, und aus einer zweiten Komponente **B**, welche Wasser und mindestens ein Polyaldimin **B1** enthält, welches erhältlich ist aus mindestens einem Polyamin **PA** mit aliphatischen primären Aminogruppen und mindestens einem geruchsarmen Aldehyd **ALD** nach Formel (I) oder Formel (II).

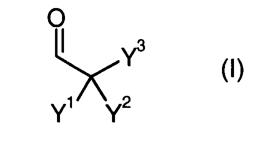

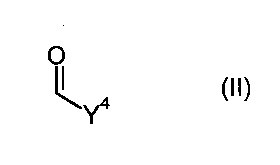

Y¹ und Y² stellen hierbei entweder unabhängig voneinander ein Wasserstoffatom, eine Hydroxylgruppe oder einen organischen Rest dar; oder sie bilden zusammen einen carbocyclischen oder heterocyclischen Ring, welcher eine Ringgrösse zwischen 5 und 8, bevorzugt 6, Atomen aufweist.
Y³ steht entweder für eine substituierte oder unsubstituierte Alkylgruppe, welche mindestens ein Heteroatom aufweist;
oder für eine verzweigte oder unverzweigte Alkyl- oder Alkylengruppe mit mindestens 10 C-Atomen;
oder für eine substituierte oder unsubstituierte Aryl- oder Arylalkylgruppe;
oder für O-R¹ oder 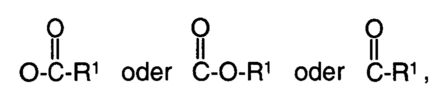 wobei R¹ seinerseits für eine Aryl-, Arylalkyl- oder Alkylgruppe mit mindestens 3 C-Atomen steht und jeweils substituiert oder unsubstituiert ist.

Y⁴ steht entweder für eine substituierte oder unsubstituierte Aryl- oder Heteroaryl-Gruppe, welche eine Ringgrösse zwischen 5 und 8, bevorzugt 6, Atomen aufweist;
oder für 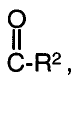 mit R² = Alkyl, Hydroxyl oder Alkoxy;
oder für eine substituierte oder unsubstituierte Alkenyl- oder Arylalkenylgruppe mit mindestens 6 C-Atomen.

Unter "Poly" in "Polyaldimin", "Polyol", "Polyisocyanat" und "Polyamin" werden im vorliegenden Dokument Moleküle verstanden, die formal zwei oder mehr der jeweiligen funktionellen Gruppen enthalten.
Der Begriff "Polyurethan" umfasst im vorliegenden Dokument sämtliche Polymere, welche nach dem Diisocyanat-Polyadditions-Verfahren hergestellt werden. Dies schliesst auch solche Polymere ein, die nahezu oder gänzlich frei sind von Urethangruppen, wie Polyether-Polyurethane, Polyester-Polyurethane, Polyether-Polyharnstoffe, Polyharnstoffe, Polyester-Polyharnstoffe, Polyisocyanurate, Polycarbodiimide, usw.
Der Begriff "Polyamin mit aliphatischen primären Aminogruppen" bezeichnet im vorliegenden Dokument stets Verbindungen, die formal zwei oder mehr NH₂-Gruppen enthalten, die an einen aliphatischen, cycloaliphatischen oder arylaliphatischen Rest gebunden sind. Sie unterscheiden sich damit von den aromatischen Aminen, in welchen die Aminogruppen direkt an einen aromatischen Rest gebunden sind, wie beispielsweise in Anilin oder 2-Aminopyridin.
Unter einer "geruchsarmen" Substanz und einer Substanz "mit einer geringen Geruchsbildung" wird unterschiedslos eine Substanz verstanden, deren Geruch von menschlichen Individuen nur in geringem Masse wahrnehmbar, d.h. riechbar, ist, die also keinen intensiven Geruch aufweist wie beispielsweise Formaldehyd, Acetaldehyd, Isobutyraldehyd, oder Lösemittel wie Aceton, Methylethylketon oder Methylisobutylketon, und wobei dieser geringe Geruch von den meisten menschlichen Individuen nicht als unangenehm oder abstossend empfunden wird.
Unter einer "geruchsfreien" Substanz wird eine Substanz verstanden, die für die meisten menschlichen Individuen nicht riechbar ist, die also keinen wahrnehmbaren Geruch aufweist.

Die erfindungsgemässe zweikomponentige Polyurethanzusammensetzung enthält in der ersten Komponente **A** mindestens ein Polyurethanprepolymer **A1** mit Isocyanatendgruppen, hergestellt aus mindestens einem Polyisocyanat und mindestens einem Polyol.
Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Der Überschuss an Polyisocyanat wird so gewählt, dass im resultierenden Polyurethanprepolymer **A1** nach der Umsetzung aller Hydroxylgruppen des Polyols ein Gehalt an freien Isocyanatgruppen von 0.1 bis 15 Gewichts-%, bevorzugt 0.5 bis 5 Gewichts-%, bezogen auf das gesamte Polyurethanprepolymer **A1,** verbleibt. Gegebenenfalls kann das Polyurethanprepolymer **A1** unter,Mitverwendung von Weichmachern hergestellt werden, wobei die verwendeten Weichmacher keine gegenüber Isocyanaten reaktive Gruppen enthalten.

Als Polyole für die Herstellung des Polyurethanprepolymers **A1** können beispielsweise die folgenden handelsüblichen Polyole oder beliebige Mischungen davon eingesetzt werden:
- Polyoxyalkylenpolyole, auch Polyetherpolyole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2-und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.
   Besonders geeignet sind Polyoxyalkylendiole oder Polyoxyalkylentriole, insbesondere Polyoxypropylendiole oder Polyoxypropylentriole.
   Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxypropylendiole und -triole mit einem Molekulargewicht von 400 bis 8'000 g/mol. Unter "Molekulargewicht" oder "Molgewicht" versteht man im vorliegenden Dokument stets das Molekulargewichtsmittel Mₙ.
   Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyfunktionelle Polybutadiene.
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind,
- Polyacrylat- und Polymethacrylatpolyole.

Diese genannten Polyole weisen ein mittleres Molekulargewicht von 250 bis 30'000 g/mol und eine mittlere OH-Funktionalität im Bereich von 1.6 bis 3 auf.

Zusätzlich zu diesen genannten Polyolen können niedrigmolekulare zwei- oder mehrwertige Alkohole wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole und andere höherwertige Alkohole, niedrigmolekulare Alkoxylierungsprodukte der vorgenannten zwei- und mehrwertigen Alkohole sowie Mischungen der vorgenannten Alkohole bei der Herstellung des Polyurethanprepolymers **A1** mitverwendet werden.

Für die Herstellung des Polyurethanprepolymers **A1** werden handelsübliche Polyisocyanate verwendet. Als Beispiele seien die folgenden, in der Polyurethanchemie bestens bekannten Polyisocyanate erwähnt:
2,4- und 2,6-Toluylendiisocyanat (TDI) und beliebige Gemische dieser Isomeren, 4,4'-Diphenylmethandiisocyanat (MDI), die stellungsisomeren Diphenylmethandiisocyanate, 1,3- und 1,4-Phenylendiisocyanat, 2,3,5,6-Tetramethyl-1,4-diisocyanatobenzol, 1,6-Hexamethylendiisocyanat (HDI), 2-Methylpentamethylen-1 ,5-diisocyanat, 2,2,4- und 2,4,4-Trimethyl-1,6-hexamethylendiisocyanat (TMDI), 1,12-Dodecamethylendiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=lsophorondiisocyanat oder IPDI), Perhydro-2,4'- und -4,4'-diphenylmethandiisocyanat (HMDI), 1,4-Diisocyanato-2,2,6-trimethylcyclohexan (TMCDI), m- und p-Xylylendiisocyanat (XDI), 1,3- und 1,4-Tetramethylxylylendiisocyanat (TMXDI), 1,3-und 1,4-Bis-(isocyanatomethyl)-cyclohexan, sowie Oligomere und Polymere der vorgenannten Isocyanate, sowie beliebige Mischungen der vorgenannten Isocyanate. Besonders bevorzugt sind MDI, TDI, HDI und IPDI.

Die erste Komponente **A** hat die Fähigkeit, auch allein, also ohne Kontakt mit der zweiten Komponente **B**, auszuhärten. Die Isocyanatgruppen der ersten Komponente **A** können mit Feuchtigkeit, beispielsweise aus der Luft, reagieren, und so das Polymer aushärten, analog zu einer einkomponentigen feuchtigkeitshärtenden Polyurethanzusammensetzung. Falls gewünscht, kann die Reaktion der Isocyanatgruppen mit Wasser zusätzlich beschleunigt werden, indem zur ersten Komponente **A** ein geeigneter Katalysator zugegeben wird. Als Katalysatoren eignen sich beispielsweise Organozinnverbindungen wie Dibutylzinndilaurat, Dibutylzinndichlorid, Dibutylzinndiacetylacetonat, Bismut-organische Verbindungen oder Bismut-Komplexe, oder amingruppenhaltige Verbindungen wie beispielsweise 2,2'-Dimorpholinodiethylether.

In der zweiten Komponente **B** enthält die erfindungsgemässe zweikomponentige Polyurethanzusammensetzung Wasser und mindestens ein Polyaldimin **B1.**
Das Polyaldimin **B1** ist herstellbar aus mindestens einem Polyamin **PA** mit aliphatischen primären Aminogruppen und mindestens einem Aldehyd **ALD** durch eine Kondensationsreaktion unter Abspaltung von Wasser. Solche Kondensationsreaktionen sind bestens bekannt und beschrieben, beispielsweise in Houben-Weyl, "Methoden der organischen Chemie", Vol. Xl/2, Seite 73 ff. Es handelt sich dabei um Gleichgewichtsreaktionen, wobei das Gleichgewicht überwiegend auf der Seite des Polyaldimins liegt. Das heisst, beim Vermischen eines Polyamins mit aliphatischen primären Aminogruppen mit mindestens einer stöchiometrischen Menge eines Aldehyds wird das entsprechende Polyaldimin spontan gebildet, unabhängig davon, ob das bei der Reaktion abgespaltene Wasser aus der Reaktionsmischung entfernt wird oder nicht.

Als Polyamine **PA** mit aliphatischen primären Aminogruppen zur Herstellung des Polyaldimins **B1** kommen die in der Polyurethanchemie bekannten Polyamine in Frage, wie sie unter anderem für zweikomponentige Polyurethane verwendet werden. Als Beispiele seien die folgenden erwähnt: Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexamethylendiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,2-, 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)-cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan, 1,4-Diamino-2,2,6-trimethylcyclohexan (TMCDA), 3,9-Bis-(3-aminopropyl)-2,4,8,10-tetraoxaspiro[5.5]undecan, 1,3-und 1,4-Xylylendiamin, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine® (hergestellt von Huntsman Chemicals), sowie Mischungen der vorgenannten Polyamine.

Bevorzugte Polyamine **PA** sind 1,6-Hexamethylendiamin, MPMD, DAMP, 2,2,4- und 2,4,4-Trimethylhexamethylendiamin, 4-Aminomethyl-1,8-octandiamin, IPDA, 1,3- und 1,4-Xylylendiamin, 1,3- und 1,4-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1 .0^{2,6}]decan, 1,2-, 1,3- und 1,4-Diaminocyclohexan, 1,4-Diamino-2,2,6-trimethylcyclohexan, Polyoxyalkylen-Polyamine mit theoretisch zwei oder drei Aminogruppen, insbesondere Jeffamine® EDR-148, Jeffamine® D-230, Jeffamine® D-400 und Jeffamine® T-403, sowie insbesondere Mischungen von zwei oder mehr der vorgenannten Polyamine.

Das in der erfindungsgemässen Zusammensetzung enthaltene Polyaldimin **B1** ist erhältlich aus mindestens einem Polyamin **PA** mit aliphatischen primären Aminogruppen und aus mindestens einem Aldehyd **ALD**, wobei dieser Aldehyd geruchsarm ist. Es ist ein wesentliches Merkmal der Erfindung, dass der verwendete Aldehyd geruchsarm ist.

In einer ersten Ausführungsform werden Aldehyde **ALD** der folgenden Formel (I) verwendet:

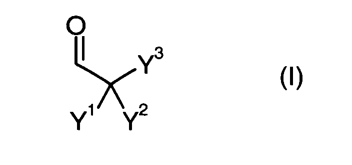

Y¹ und Y² stellen einerseits unabhängig voneinander ein Wasserstoffatom, eine Hydroxylgruppe oder einen organischen Rest dar.
Andererseits können Y¹ und Y² miteinander zu einem carbocyclischen oder heterocyclischen Ring verbunden sein, welcher eine Ringgrösse zwischen 5 und 8, bevorzugt 6, Atomen aufweist.

Für Y³ sind vier Möglichkeiten vorhanden:
Y³ kann für eine substituierte oder unsubstituierte Alkylgruppe stehen, welche mindestens ein Heteroatom aufweist, insbesondere in der Form eines Ether-Sauerstoffs, einer Carboxyl-, einer Ester- oder einer Hydroxylgruppe.
Y³ kann aber auch für eine verzweigte oder unverzweigte Alkyl- oder Alkylengruppe mit mindestens 10 C-Atomen stehen.
Weiterhin kann Y³ auch für eine substituierte oder unsubstituierte Aryloder Arylalkylgruppe stehen.
Schliesslich kann Y³ auch für einen Rest der Formel O-R¹ oder 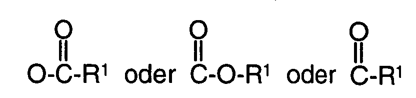 stehen, wobei R¹ seinerseits für eine Aryl-, Arylalkyl- oder Alkylgruppe mit mindestens 3 C-Atomen steht und jeweils substituiert oder unsubstituiert ist.

Beispiele für Verbindungen nach Formel (I) sind
Decanal, Dodecanal; Ether aus 2-Hydroxy-2-methylpropanal und Alkoholen wie Propanol, Isopropanol, Butanol und 2-Ethylhexanol; Ester aus 2-Formyl-2-methylpropionsäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; Aldosen wie beispielsweise Glycerinaldehyd, Erythrose oder Glukose; 2-Phenylacetaldehyd, 2-Phenylpropionaldehyd (Hydratropaldehyd); sowie die im folgenden als insbesondere geeignet aufgeführten Aldehyde.

Insbesondere geeignet sind einerseits Verbindungen nach Formel (III): 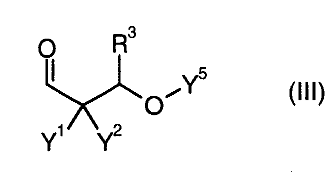 wobei R³ und Y⁵ unabhängig voneinander für ein Wasserstoffatom oder für eine Alkyl- oder Aryalkylgruppe stehen und Y¹ und Y² die bereits beschriebene Bedeutung aufweisen.

Als Beispiele für Verbindungen der Formel (III) erwähnt werden sollen 3-Hydroxypivalaldehyd, 3-Hydroxy-2-methylpropionaldehyd, 3-Hydroxy-propionaldehyd, 3-Hydroxybutyraldehyd, 3-Hydroxyvaleraldehyd; β-Hydroxyaldehyde, wie sie aus einer gekreuzten Aldol-Reaktion aus Formaldehyd und Aldehyden wie 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd), Diphenylacetaldehyd entstehen; sowie Ether aus solchen β-Hydroxyaldehyden und Alkoholen wie Methanol, Ethanol, Propanol, Isopropanol, Butanol, 2-Ethylhexanol oder Fettalkoholen, wie zum Beispiel 3-Methoxy- und 3-Ethoxy- und 3-Propoxy- und 3-Isopropoxy- und 3-Butoxy-, sowie 3-(2-Ethylhexoxy)-2,2-dimethylpropanal.
Insbesondere geeignet sind andererseits Verbindungen nach Formel (IV): 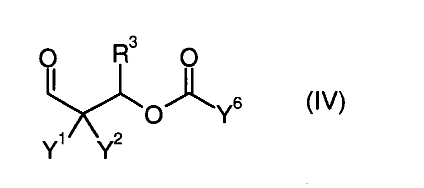 wobei Y¹, Y² und R³ die bereits beschriebene Bedeutung haben, und
Y⁶ ein Wasserstoffatom oder eine Alkyl- oder Arylalkyl- oder Arylgruppe, gegebenenfalls mit mindestens einem Heteroatom, insbesondere mit mindestens einem Ether-Sauerstoff, und gegebenenfalls mit mindestens einer Carboxylgruppe, und gegebenenfalls mit mindestens einer Estergruppe, oder eine einfach oder mehrfach ungesättigte lineare oder verzweigte Kohlenwasserstoffkette darstellt.

Beispiele für bevorzugte Aldehyde der Formel (IV) sind Produkte einer Veresterung aus den bereits erwähnten β-Hydroxyaldehyden wie 3-Hydroxypivalaldehyd, 3-Hydroxy-isobutyraldehyd, 3-Hydroxypropionaldehyd, 3-Hydroxybutyraldehyd, 3-Hydroxyvaleraldehyd 2-Hydroxymethyl-2-methylbutyraldehyd, 2-Hydroxymethyl-2-ethyl-butyraldehyd, 2-Hydroxymethyl-2-methyl-valeraldehyd, 2-Hydroxymethyl-2-ethyl-hexanal, 1-Hydroxymethyl-cyclopentancarbaldehyd, 1-Hydroxymethyl-cyclohexancarbaldehyd 1-Hydroxymethyl-cyclohex-3-encarbaldehyd, 2-Hydroxymethyl-2-methyl-3-phenyl-propionaldehyd, 3-Hydroxy-2-methyl-2-phenyl-propionaldehyd und 3-Hydroxy-2,2-diphenyl-propionaldehyd mit Carbonsäuren wie Ameisensäure, Essigsäure, Propionsäure, Buttersäure, Isobuttersäure, 2-Ethyl-capronsäure und Benzoesäure, sowie die im folgenden als besonders bevorzugt aufgeführten Aldehyde.

In einer besonders bevorzugten Ausführungsform werden Aldehyde **ALD** der Formel (IV) verwendet, welche geruchsfrei sind und deren Reste R³ und Y⁶ folgendermassen eingeschränkt sind:
R³ steht für ein Wasserstoffatom, und
Y⁶ steht einerseits für eine lineare oder verzweigte Alkylkette mit 11 bis 30 Kohlenstoff-Atomen, gegebenenfalls mit mindestens einem Heteroatom, insbesondere mit mindestens einem Ether-Sauerstoff,
oder für eine einfach oder mehrfach ungesättigte lineare oder verzweigte Kohlenwasserstoffkette mit 11 bis 30 Kohlenstoff-Atomen,
oder für einen Rest der Formel (V) oder (VI).

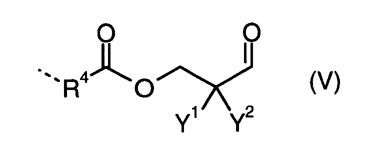

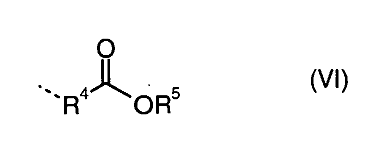

In den Formeln (V) und (VI) steht R⁴ für eine, lineare oder verzweigte oder cyclische, Alkylenkette mit 2 bis 16 Kohlenstoff-Atomen, gegebenenfalls mit mindestens einem Heteroatom, insbesondere mit mindestens einem Ether-Sauerstoff, oder für eine einfach oder mehrfach ungesättigte lineare oder verzweigte oder cyclische Kohlenwasserstoffkette mit 2 bis 16 Kohlenstoff-Atomen,
und R⁵ steht für eine lineare oder verzweigte Alkylkette mit 1 bis 8 Kohlenstoff-Atomen, und
Y¹ und Y² weisen die bereits beschriebene Bedeutung auf.
Die gestrichelte Linie in den Formeln (V) und (VI) bezeichnet jeweils die Verbindungsstelle.

Diese Ausführungsform der Erfindung ermöglicht es, nicht nur Polyurethanzusammensetzungen mit einer geringen Geruchsbildung, sondern solche ganz ohne wahrnehmbaren Geruch herzustellen. Dies ist besonders vorteilhaft für Anwendungen im Innenbereich von Bauwerken und Fahrzeugen.

Beispiele für diese besonders bevorzugten geruchsfreien Aldehyde der Formel (IV), welche in Polyurethanzusammensetzungen keinen wahrnehmbaren Geruch verursachen, sind Veresterungsprodukte aus den bereits genannten β-Hydroxyaldehyden wie 3-Hydroxy-pivalaldehyd, 3-Hydroxy-isobutyraldehyd, 3-Hydroxypropanal, 3-Hydroxybutyraldehyd, 3-Hydroxyvaleraldehyd 2-Hydroxymethyl-2-methyl-butyraldehyd, 2-Hydroxymethyl-2-ethylbutyraldehyd, 2-Hydroxymethyl-2-methyl-valeraldehyd, 2-Hydroxymethyl-2-ethyl-hexanal, 1-Hydroxymethyl-cyclopentancarbaldehyd, 1-Hydroxymethyl-cyclohexancarbaldehyd 1-Hydroxymethyl-cyclohex-3-encarbaldehyd, 2-Hydroxymethyl-2-methyl-3-phenyl-propionaldehyd, 3-Hydroxy-2-methyl-2-phenyl-propionaldehyd und 3-Hydroxy-2,2-diphenyl-propionaldehyd mit Carbonsäuren wie beispielsweise Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, dehydrierte Ricinolsäuren, sowie Fettsäuren aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl.
Bevorzugte Carbonsäuren sind Laurinsäure, Myristinsäure, Palmitinsäure, Stearinsäure, Ölsäure, Linolsäure, Linolensäure, Bernsteinsäure, Adipinsäure, Azelainsäure und Sebacinsäure und technische Gemische von Fettsäuren, welche diese Säuren enthalten.
In einer bevorzugten Herstellmethode eines Aldehyds **ALD** der Formel (IV) wird ein β-Hydroxyaldehyd, beispielsweise einer der bereits genannten β-Hydroxyaldehyde wie 3-Hydroxypivalaldehyd, welcher beispielsweise aus Formaldehyd (oder Paraformaldehyd) und Isobutyraldehyd, gegebenenfalls in situ, hergestellt werden kann, mit einer Carbonsäure, insbesondere einer langkettigen Fettsäure, zum entsprechenden Ester umgesetzt, nämlich entweder mit einer Carbonsäure Y⁶-COOH zum entsprechenden Carbonsäureester von beispielsweise 3-Hydroxypivalaldehyd; und / oder mit einem Dicarbonsäuremonoalkylester HOOC-R⁴-COOR⁵ zum Aldehyd der Formel (IV) mit dem Rest Y⁶ nach Formel (VI); und / oder mit einer Dicarbonsäure HOOC-R⁴-COOH zum Aldehyd der Formel (IV), in diesem Falle ein Dialdehyd, mit dem Rest Y⁶ nach Formel (V). Die Formeln (V) und (VI) und Y⁶, R⁴ und R⁵ haben dabei die bereits beschriebene Bedeutung. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.
Im Fall der Verwendung von Dicarbonsäuren wird ein Gemisch aus den Aldehyden der Formel (IV) mit den Resten Y⁶ nach Formel (V) und nach Formel (VI) erhalten, wenn beispielsweise zuerst ein Teil der Carbonsäuregruppen mit einem β-Hydroxyaldehyd, beispielsweise 3-Hydroxypivalaldehyd, verestert wird, und anschliessend die restlichen Carbonsäuregruppen mit einem Alkylalkohol (R⁵-OH) verestert werden. Ein solches Gemisch kann zur Herstellung des Polyaldimins **B1** direkt weiterverwendet werden.
Geeignete Carbonsäuren zur Veresterung mit einem β-Hydroxyaldehyd, beispielsweise mit 3-Hydroxypivalaldehyd, sind beispielsweise die bereits genannten kurzkettigen und langkettigen Carbonsäuren.

In einer weiteren Ausführungsform werden Aldehyde **ALD** der folgenden Formel (II) verwendet:

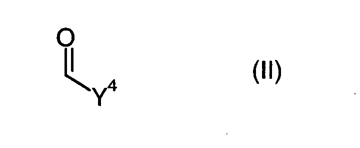

Y⁴ kann einerseits für eine substituierte oder unsubstituierte Aryl- oder Heteroaryl-Gruppe stehen, welche eine Ringgrösse zwischen 5 und 8, bevorzugt 6, Atomen aufweist.

Andererseits kann Y⁴ für einen Rest der Formel 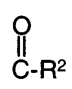 stehen, wobei R² seinerseits eine Alkyl-, Hydroxyl- oder Alkoxygruppe darstellt.
Schliesslich kann Y⁴ für eine substituierte oder unsubstituierte Alkenyloder Arylalkenylgruppe mit mindestens 6 C-Atomen stehen.

Beispiele für Aldehyde nach Formel (II) sind Benzaldehyd, 2- und 3-und 4-Tolualdehyd, 4-Ethyl- und 4-Propyl- und 4-Isopropyl und 4-Butylbenzaldehyd, Salicylaldehyd, 2,4-Dimethylbenzaldehyd, 2,4,5-Trimethylbenzaldehyd, 4-Acetoxybenzaldehyd, 4-Anisaldehyd, 4-Ethoxybenzaldehyd, die isomeren Di- und Trialkoxybenzaldehyde, Vanillin, o-Vanillin, 2-, 3- und 4-Carboxybenzaldehyd, 4-Dimethylamino-benzaldehyd, 2-, 3- und 4-Nitrobenzaldehyd, 2- und 3- und 4-Formylpyridin, 2-Furfuraldehyd, 2-Thiophencarbaldehyd, 1- und 2-Naphthylaldehyd, 3- und 4-Phenyloxy-benzaldehyd; Chinolin-2-carbaldehyd und dessen 3-, 4-, 5-, 6-, 7- und 8-Stellungsisomere, Anthracen-9-carbaldehyd, Phthalaldehyd, Isophthalaldehyd, Terephthalaldehyd, sowie Glyoxalsäure, Glyoxalsäuremethylester und Zimtaldehyd.
Bevorzugt sind Benzaldehyd, 4-Dimethylamino-benzaldehyd, 3- und 4-Phenyloxy-benzaldehyd, Phthalaldehyd, Isophthalaldehyd, Terephthalaldehyd, Glyoxalsäure und Zimtaldehyd.

Durch die Umsetzung mindestens eines Polyamins **PA** mit aliphatischen primären Aminogruppen mit mindestens einem Aldehyd **ALD** der Formel (I) oder Formel (II) entstehen beispielsweise Polyaldimine **B1** der schematischen Formeln (VII), (VIII) und (IX) 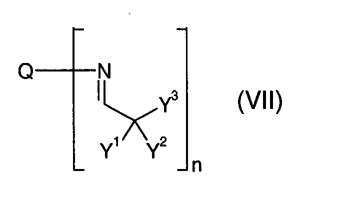 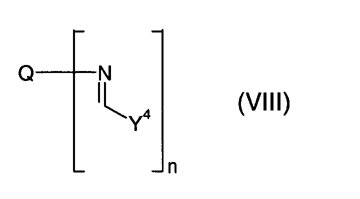 wobei n für 2, 3 oder 4 steht und Q den Rest eines Polyamins mit aliphatischen primären Aminogruppen nach Entfernung aller primären Aminogruppen darstellt; und 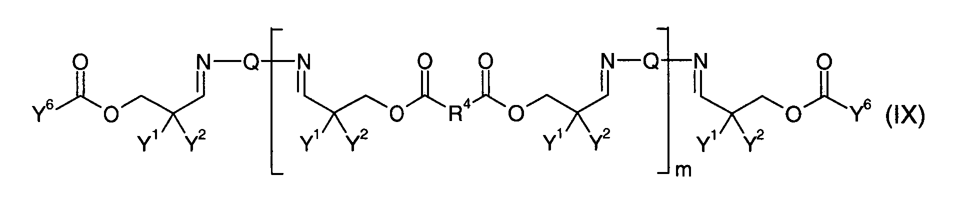 wobei m für eine ganze Zahl von 0 bis 10 steht und Q in demselben Molekül gleich oder verschieden ist und jeweils den Rest eines Polyamins mit aliphatischen primären Aminogruppen nach Entfernung aller primären Aminogruppen darstellen soll. Die Reste Y¹, Y², Y³, Y⁴, Y⁶ und R⁴ in den Formeln (VII), (VIII) und (IX) haben dabei die bereits beschriebene Bedeutung.
Wird ein Dialdehyd der Formel (IV) mit dem Rest Y⁶ nach Formel (V) für die Herstellung eines Polyaldimins **B1** verwendet, so wird dieser vorteilhaft entweder in einer Mischung mit einem Monoaldehyd der Formel (IV) eingesetzt, und zwar in einem solchen Mengenverhältnis, dass für das Polyaldimin **B1** nach Formel (IX) für m im Mittel Werte im Bereich von 1 bis 10 erhalten werden; oder das Dialdehyd nach Formel (IV) wird so dosiert, dass ein Überschuss an Aldehydgruppen im Verhältnis zu den Aminogruppen bei der Herstellung des Polyaldimins **B1** vorhanden ist, wobei der Aldehyd-Überschuss so gewählt wird, dass für das Polyaldimin **B1** der Formel (IX) für m ebenfalls im Mittel Werte im Bereich von 1 bis 10 erhalten werden. Auf beide Arten wird ein Gemisch oligomerer Polyaldimine mit einer gut handhabbaren Viskosität erhalten.

Als Polyaldimin **B1** können auch Mischungen verschiedener Polyaldimine verwendet werden, insbesondere auch Mischungen verschiedener Polyaldimine hergestellt mit Hilfe von verschiedenen Polyaminen **PA** mit aliphatischen primären Aminogruppen, umgesetzt mit verschiedenen oder gleichen Aldehyden **ALD** der Formel (I) oder (II). Es kann auch durchaus vorteilhaft sein, Mischungen von Polyaldiminen **B1** herzustellen, indem Mischungen von Polyaminen **PA** mit unterschiedlicher Anzahl aliphatischer primärer Aminogruppen eingesetzt werden.

Für die Herstellung des Polyaldimins **B1** werden die Aldehydgruppen des Aldehyds **ALD** in Bezug auf die primären Aminogruppen des Polyamins **PA** stöchiometrisch oder in stöchiometrischem Überschuss eingesetzt.
Üblicherweise wird das Polyaldimin **B1** der zweiten Komponente **B** in einer unterstöchiometrischen Menge bezogen auf die Isocyanatgruppen des Prepolymers **A1** der ersten Komponente **A** eingesetzt, und zwar in einer Menge von 0.1 bis 0.99 Equivalent Aldimingruppen pro Equivalent Isocyanatgruppen, insbesondere in einer Menge von 0.4 bis 0.8 Equivalent Aldimingruppen pro Equivalent Isocyanatgruppen.

Des weiteren ist in der zweiten Komponente **B** Wasser vorhanden. Die Menge Wasser, welche für eine vollständige Aushärtung der Polyurethanzusammensetzung notwendig ist, kann mit Hilfe der folgenden Formel (X) berechnet werden:

(mol Wasser) = (Eq Aldimin) + [(Eq NCO) - (Eq Aldimin)] / 2 (X)

wobei "Eq" für "Equivalent", "Aldimin" für "Aldimingruppen" und "NCO" für "Isocyanatgruppen" steht.

Die zweite Komponente **B** muss nicht exakt die zur vollständigen Aushärtung der ersten Komponente **A** erforderliche Wassermenge nach Formel (X) enthalten. Sie kann beispielsweise eine höhere Wassermenge enthalten, beispielsweise die doppelte Menge oder mehr, oder es kann weniger Wasser in der zweiten Komponente **B** vorhanden sein als mit Hilfe der Formel (X) berechnet. In diesem Fall muss das restliche zur Aushärtung benötigte Wasser aus der Luftfeuchtigkeit aufgenommen werden. Vorteilhaft ist, wenn mindestens die zur vollständigen Überführung des Polyaldimins ins Polyamin benötigte Menge Wasser in der zweiten Komponente **B** vorhanden ist. Das heisst, die zweite Komponente **B** enthält bevorzugt mindestens soviel Mol Wasser wie Equivalent Aldimingruppen vorhanden sind, oder anders ausgedrückt: Die zweite Komponente **B** weist bevorzugt mindestens ein Molekül Wasser pro Aldimingruppe auf.

Das Wasser kann in der zweiten Komponente **B** entweder als freies Wasser vorliegen, oder es kann an ein Trägermaterial gebunden sein. Die Bindung muss allerdings reversibel sein, das heisst, das Wasser muss nach dem Vermischen der beiden Komponenten **A** und **B** für die Reaktion mit den Aldimingruppen und den Isocyanatgruppen zugänglich sein.
Geeignete Trägermaterialien für die Komponente **B** können Hydrate oder Aquokomplexe sein, insbesondere anorganische Verbindungen, die Wasser in koordinativer Art oder als Kristallwasser gebunden haben. Beispiele für solche Hydrate sind Na₂SO₄·10H₂O, CaSO₄·2H₂O, CaSO₄·½H₂O, Na₂B₄O₇·10H₂O, MgSO₄·7H₂O.

Weitere geeignete Trägermaterialien sind poröse Materialien, welche Wasser in Hohlräume einschliessen. Insbesondere handelt es sich hier um spezielle Silicate und Zeolithe. Besonders geeignet sind Kieselgur und Molekularsiebe. Die Grösse der Hohlräume ist dabei so zu wählen, dass sie für die Aufnahme von Wasser optimal sind. Deshalb zeigen sich Molekularsiebe mit einer Porengrösse von 4 Å als besonders geeignet.
Weitere geeignete Trägermaterialien sind solche, die Wasser in nicht stöchiometrischen Mengen aufnehmen und eine pastöse Konsistenz haben oder Gele bilden. Diese Trägermaterialien können anorganischer oder organischer Natur sein. Beispiele hierfür sind Kieselgele, Tone wie Montmorillonit, Bentonite, Hectorit, oder Polysaccharide wie Zellulose und Stärke, oder Polyacrylsäuren und Polyacrylonitrile, die auch unter dem Begriff "Super-Absorber" bekannt sind und beispielsweise in Hygieneartikeln eingesetzt werden. Weiterhin sind ionische Gruppen tragende Trägermaterialien geeignet. Besonders bevorzugt als Trägermaterialien sind Polyurethanpolymere mit Carboxylgruppen oder Sulfonsäuregruppen als Seitenketten respektive deren Salze, insbesondere deren Ammoniumsalze. Diese Trägermaterialien können Wasser aufnehmen und binden, bis die Wasseraufnahme-Kapazität erschöpft ist.
Die besonders bevorzugten Polyurethanpolymere mit Carboxylgruppen oder Sulfonsäuregruppen als Seitenketten, respektive deren Salze, können beispielsweise aus Polyisocyanaten und Polyolen, welche Carbonsäure- oder Sulfonsäuregruppen enthalten, erhalten werden. Die Säuregruppen können anschliessend, beispielsweise im ausreagierten Zustand, mit Basen, insbesondere tertiären Aminen, neutralisiert werden. Die Eigenschaften des Trägermaterials sind stark abhängig von den verwendeten funktionellen Polyolen und Polyisocyanaten: Insbesondere ist auf die Hydrophilie beziehungsweise Hydrophobie der gewählten Isocyanate und Polyole zu achten. Es hat sich gezeigt, dass vor allem kurzkettige Polyole sehr geeignete Trägermaterialien ergeben.

In den beschriebenen Polyurethanzusammensetzungen können zusätzlich unter anderem die folgenden, in der Polyurethanindustrie wohlbekannten Hilfs- und Zusatzmittel vorhanden sein:
Weichmacher, beispielsweise Ester organischer Carbonsäuren oder deren Anhydride, Phthalate, wie beispielsweise Dioctylphthalat oder Diisodecylphthalat, Adipate, wie zum Beispiel Dioctyladipat, Sebacate, organische Phosphor- und Sulfonsäureester, Polybutene und andere, mit Isocyanaten nicht reagierende Verbindungen; Reaktiwerdünner und Vernetzer, beispielsweise mehrwertige Alkohole, Polyamine, Polyaldimine, Polyketimine oder aliphatische Isocyanate wie beispielsweise 1,6-Hexamethylendiisocyanat, 2,2,4- und 2,4,4- Trimethyl-1 ,6-hexamethylendiisocyanat, 1,12-Dodecamethylendiisocyanat, Cyclohexan-1,3- und 1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat, 1,3- und 1,4-Tetramethylxylylendiisocyanat, Isocyanurate dieser Isocyanate, Oligomere und Polymere dieser Isocyanate sowie ihre Addukte mit Polyolen; anorganische und organische Füllstoffe, wie zum Beispiel gemahlene oder gefällte Calciumcarbonate, welche gegebenenfalls mit Stearaten beschichtet sind, insbesondere feinteiliges beschichtetes Calciumcarbonat, Russe, Kaoline, Aluminiumoxide, Kieselsäuren und PVC-Pulver oder Hohlkugeln; Fasern, beispielsweise aus Polyethylen; Pigmente; Katalysatoren wie beispielsweise Organozinnverbindungen wie Dibutylzinndilaurat, Dibutylzinndichlorid, Dibutylzinndiacetylacetonat, Bismut-organische Verbindungen oder Bismut-Komplexe, oder amingruppenhaltige Verbindungen wie beispielsweise 2,2'-Dimorpholinodiethylether, oder andere, in der Polyurethanchemie übliche Katalysatoren für die Reaktion der Isocyanatgruppen; des weiteren Katalysatoren für die Hydrolyse des Polyaldimins wie beispielsweise organische Carbonsäuren wie Benzoesäure oder Salicylsäure, ein organisches Carbonsäureanhydrid wie Phthalsäureanhydrid oder Hexahydrophthalsäureanhydrid, ein Silylester organischer Carbonsäuren, eine organische Sulfonsäure wie p-Toluolsulfonsäure oder 4-Dodecylbenzolsulfonsäure, oder eine andere organische oder anorganische Säure, oder Mischungen der vorgenannten Säuren; Rheologie-Modifizierer wie beispielsweise Verdickungsmittel, zum Beispiel Harnstoffverbindungen, Polyamidwachse, Bentonite oder pyrogene Kieselsäuren; Haftvermittler, insbesondere Silane wie Epoxysilane, Vinylsilane, Isocyanatosilane und mit Aldehyden zu Aldiminosilanen umgesetzte Aminosilane, sowie oligomere Formen dieser Silane; Trocknungsmittel wie beispielsweise p-Tosylisocyanat und andere reaktive Isocyanate, Orthoameisensäureester, Calciumoxid oder Molekularsiebe; Stabilisatoren gegen Wärme, Licht- und UV-Strahlung; flammhemmende Substanzen; oberflächenaktive Substanzen wie beispielsweise Netzmittel, Verlaufsmittel, Entlüftungsmittel oder Entschäumer; Fungizide oder das Pilzwachstum hemmende Substanzen; sowie weitere, in der Polyurethanindustrie üblicherweise eingesetzte Substanzen, wobei dem Fachmann klar ist, ob diese zusätzlichen Substanzen als Zusätze für beide oder nur für je eine der beiden Komponenten **A** und **B** geeignet sind.

Die erfindungsgemässe zweikomponentige Polyurethanzusammensetzung erlaubt insbesondere auch die Formulierung von weissen Zusammensetzungen, die rasch und ohne die Bildung von Blasen aushärten. Es ist bekannt, dass mit Wasser aushärtende weisse Systeme oft eine starke Blasenbildung zeigen, da diese Systeme keinen Russ enthalten, welcher in schwarzen Systemen die Bildung von Blasen teilweise unterdrücken kann.

Die Herstellung und Lagerung der zwei Komponenten, insbesondere der ersten Komponente **A**, erfolgt unter Ausschluss von Feuchtigkeit. Die beiden Komponenten sind getrennt voneinander lagerstabil, d.h. sie können in einer geeigneten Verpackung oder Anordnung, wie beispielsweise in einem Fass, einem Beutel oder einer Kartusche, vor ihrer Anwendung während mehreren Monaten bis zu einem Jahr und länger aufbewahrt werden, ohne dass sie ihre Anwendbarkeit verlieren. In einer Ausführungsform kann die zweite Komponente **B** in einem wie weiter unten beschriebenen Behälter, der in einem Dosieraufsatz integriert ist, aufbewahrt werden.

Es ist auch möglich, dass die zwei Komponenten in miteinander über Trennwände getrennte Behälter abgefüllt und gelagert werden. Beispiele für solche Behälter sind Koaxial-Kartuschen oder Zwillingskartuschen.
Es kann vorteilhaft sein, die Konsistenz der beiden Komponenten **A** und **B** aufeinander abzustimmen, da Pasten mit einer ähnlichen Konsistenz leichter vermischt werden können.
Die vorliegende Erfindung ermöglicht es, zweikomponentige Polyurethanzusammensetzungen zu formulieren, die völlig frei von organischen Lösemitteln (VOC) sind. Dies ist besonders vorteilhaft aus ökologischen und arbeitshygienischen Gründen.

Das Mischen der beiden Komponenten **A** und **B** erfolgt vorteilhaft kontinuierlich während der Applikation. In einer möglichen Ausführungsform erfolgt das Mischen der beiden Komponenten **A** und **B** mittels eines zwei ineinander greifende Dosierrotoren enthaltenden Dosieraufsatzes. Solche bevorzugten Dosieraufsätze sind im Detail in der Patentschrift EP 0 749 530 beschrieben. Der Dosieraufsatz wird vorzugsweise für kleinere Anwendungen auf eine handelsübliche Kartusche aufgesetzt, welche die erste Komponente **A** enthält, während die zweite Komponente **B** sich in einem Behälter befindet, welcher im Dosieraufsatz integriert ist. Die Dosierung und Mischung erfolgt bei der Applikation in diesem Dosieraufsatz, welcher passiv durch die Druckbeaufschlagung der Kartusche, beispielsweise mittels einer handelsüblichen Kartuschenpresse, betrieben wird. Für eine bessere Durchmischung kann zusätzlich ein Statikmischer an der Austrittsöffnung dieses Dosieraufsatzes angebracht werden.
Eine weitere Möglichkeit zum Mischen der beiden Komponenten **A** und **B** sind handelsübliche sogenannte Zwillingskatuschen oder sogenannte Koaxialkartuschen, jeweils mit einem an der Austrittsöffnung angebrachten Statikmischer. Bei der Verwendung von Zwillingskartuschen befinden sich die beiden Komponenten **A** und **B** in nebeneinander befestigten, separaten Kartuschen, welche in eine gemeinsame Austrittsöffnung münden. Die Applikation erfolgt mittels einer geeigneten Auspressvorrichtung, welche beide Kartuschen parallel auspresst. Bei der Verwendung von Koaxialkartuschen befindet sich eine der beiden Komponenten im Kern der Kartusche. Die andere Komponente umschliesst diese, wobei die Komponenten durch eine koaxiale Wand getrennt sind. Die beiden Komponenten werden bei der Applikation ebenfalls durch eine geeignete Auspressvorrichtung gleichzeitig ausgepresst und münden in eine gemeinsame Austrittsöffung.
Für industrielle Anwendungen hingegen kommt vorteilhaft eine Förderung der beiden Komponenten **A** und **B** aus Fässern oder Hobbock-Behältern zum Einsatz. Hierbei werden die beiden Komponenten **A** und **B** vorteilhaft mit einem Dosieraufsatz vermischt, welcher sich im Wesentlichen dadurch vom oben beschriebenen Dosieraufsatz unterscheidet, dass er über einen Schlauchanschluss für die zweite Komponente **B** verfügt.
Die Vermischung der beiden Komponenten **A** und **B** der Polyurethanzusammensetzung erfolgt im wesentlichen homogen oder im wesentlichen schichtenartig. Bevorzugt ist eine im wesentlichen homogene Vermischung. Werden die beiden Komponenten **A** und **B** im wesentlichen schichtenartig vermischt, beispielsweise indem mit einem Statikmischer mit einer geringen Anzahl Mischelementen gearbeitet wird, so entsteht nach der vollständigen Aushärtung trotzdem ein homogen durchgehärtetes Produkt, bei welchem die ursprünglichen Schichten nicht mehr sichtbar sind. Dieser Umstand ist für den Fachmann überraschend, würde man doch erwarten, dass bei einem schichtenartigen Einmischen von Polyaldiminen in eine isocyanathaltige Polyurethanzusammensetzung an den Schichtgrenzen Zonen entstehen, welche nicht richtig aushärten, also weich bleiben, weil dort das Verhältnis von Polyaldimingruppen zu Isocyanatgruppen deutlich überstöchiometrisch ist. Ueblicherweise härten isocyanathaltige Polyurethanzusammensetzungen nämlich nicht richtig aus, wenn sie mit einem stöchiometrischen Ueberschuss an Polyaminhärtern in Kontakt kommen. Der Umstand, dass die Komponenten **A** und **B** auch bei im wesentlichen schichtenartigem Vermischen zu einem homogenen Produkt aushärten, ist in der Praxis von grossem Vorteil, da auch bei einem im wesentlichen homogenen Mischprozess stets kleine Inhomogenitäten auftreten können.

Das Mischungsverhältnis zwischen der ersten Komponente **A** und der zweiten Komponente **B** ist grundsätzlich frei wählbar, bevorzugt wird jedoch ein Mischungsverhältnis **A : B** im Bereich von 200:1 bis 5:1 in Volumenteilen.
Eine typische Applikation erfolgt, indem zuerst die beiden Komponenten **A** und **B** der Polyurethanzusammensetzung wie beschrieben vermischt werden und anschliessend die vermischte Polyurethanzusammensetzung mit mindestens einer Festkörperoberfläche kontaktiert wird und aushärtet. Die Kontaktierung der Festkörperoberfläche erfolgt typischerweise als Auftrag einer Raupe auf die Oberfläche.

Beim Mischen der beiden Komponenten **A** und **B** reagiert die hydrolysierte Form des Polyaldimins **B1** mit den Isocyanatgruppen, wobei formal eine Reaktion zwischen Aminogruppen und Isocyanatgruppen stattfindet; in der Folge härtet die Polyurethanzusammensetzung, zumindest partiell, aus. Wie bereits früher erwähnt, liegt das Gleichgewicht in der zweiten Komponente **B** zwischen einerseits den Aldimingruppen und dem Wasser und andererseits den Aminogruppen und dem Aldehyd stark auf der Seite der Aldimingruppen und des Wassers. Wenn jedoch die zweite Komponente **B** mit der ersten Komponente **A** in Kontakt gebracht wird, so reagieren formal die Aminogruppen mit den Isocyanatgruppen zu Harnstoffgruppen, wodurch das Gleichgewicht laufend in Richtung Aminogruppen verschoben wird. Dadurch läuft die formale Reaktion zwischen dem Polyaldimin **B1** der zweiten Komponente **B** und den Isocyanatgruppen der ersten Komponente **A** vollständig ab. Überschüssige Isocyanatgruppen reagieren entweder mit in der zweiten Komponente **B** zusätzlich vorhandenem Wasser oder mit Wasser, welches aus der Luft aufgenommen wird (Luftfeuchtigkeit), was schliesslich zur vollständigen Aushärtung der Polyurethanzusammensetzung führt.
Die Reaktion des isocyanatgruppenhaltigen Polyurethanprepolymers **A1** mit dem hydrolysierenden Polyaldimin **B1** muss nicht notwendigerweise über das Polyamin erfolgen. Selbstverständlich sind auch Reaktionen mit Zwischenstufen der Hydrolyse des Polyaldimins zum Polyamin möglich. Beispielsweise ist es denkbar, dass das hydrolysierende Polyaldimin in der Form eines Halbaminals direkt mit dem isocyanatgruppenhaltigen Polyurethanprepolymer **A1** reagiert.
Als Folge der oben beschriebenen Reaktionen härtet die Polyurethanzusammensetzung aus.
Die für die Herstellung der Polyaldimine **B1** verwendeten Aldehyde werden bei der Aushärtung freigesetzt. Durch die Verwendung der speziellen Aldehyde **ALD** nach Formel (I) oder Formel (II) ist dabei nur ein geringer Geruch wahrnehmbar. In einer besonders bevorzugten Ausführungsform zeichnen sich die verwendeten Aldehyde **ALD** dadurch aus, dass sie aufgrund ihres niedrigen Dampfdruckes in der ausgehärteten Polyurethanzusammensetzung verbleiben, und dass sie dabei keinen wahrnehmbaren Geruch verursachen. Im Fall der Verwendung von langkettigen Fettsäuren bewirkt der hydrophobe Fettsäurerest eine geringere Wasseraufnahme der ausgehärteten Polyurethanzusammensetzung, was die Beständigkeit des Polyurethanmaterials gegenüber Hydrolyse erhöht. Zudem bietet ein hydrophober Fettsäurerest bei längerdauerndem Wasserkontakt einen guten Schutz gegen das Auswaschen der Aldehyde aus der ausgehärteten Polyurethanzusammensetzung. Diese Polyurethanzusammensetzungen weisen zudem eine gute Lichtstabilität auf.

Die beschriebenen Polyurethanzusammensetzungen zeichnen sich durch eine lange Verarbeitungszeit, eine hohe Frühfestigkeit, eine rasche und blasenfreie Aushärtung und durch eine geringe Geruchsbildung sowohl vor, während als auch nach der Aushärtung aus. Sie weisen eine äusserst gute Haftung auf diversen Festkörperoberflächen auf, was aufgrund der sehr raschen Aushärtung durchaus keine Selbstverständlichkeit darstellt, da schnell aushärtende Polyurethanzusammensetzungen erfahrungsgemäss zu Schwächen im Haftungsaufbau neigen. Die ausgehärtete zweikomponentige Polyurethanzusammensetzung verfügt über eine hohe Dehnung und eine hohe Zugfestigkeit. Durch Variation von beispielsweise der Menge und Art des Polyaldimins **B1** und der Menge Wasser bezogen auf die Menge Isocyanatgruppen lässt sich die Verarbeitungszeit variieren, sowie der Aufbau der Frühfestigkeit und die Aushärtungsgeschwindigkeit beeinflussen.

Mit den beschriebenen Polyurethanzusammensetzungen ist es möglich, ein baukastenartig (modular) aufgebautes zweikomponentiges Produktesystem zu formulieren, welches aus einer universellen ersten Komponente **A** und einer Palette von verschiedenen zweiten Komponenten **B** besteht. Je nach den Anforderungen einer Applikation lässt sich die am besten geeignete Komponente **B** mit der - stets unverändert belassenen - Komponente **A** kombinieren. Mit einem solchen System können auf einfache Weise Polyurethanzusammensetzungen mit unterschiedlich langen Verarbeitungszeiten, Frühfestigkeiten, Aushärtegeschwindigkeiten, unterschiedlich ausgeprägter Geruchsbildung bei der Aushärtung und unterschiedlichen mechanischen Eigenschaften erhalten werden, ohne dass die Komponente **A** neu formuliert werden muss. Dies ist beispielsweise für einen Klebstoffhersteller von grossem Vorteil, da es wesentlich günstiger ist, wenn die feuchtigkeitsempfindliche erste Komponente **A** in gleichbleibender Formulierung in grosser Menge hergestellt werden kann.

Die beschriebene Polyurethanzusammensetzung ist geeignet als Klebstoff für das Verkleben und Abdichten von diversen Substraten, beispielsweise zum Verkleben von Bauteilen bei der Herstellung von Automobilen, Schienenfahrzeugen, Schiffen oder anderen industriellen Gütern, als Dichtstoff aller Art, beispielsweise zum Abdichten von Fugen im Bau, sowie als Beschichtung oder Belag für diverse Artikel beziehungsweise variable Festkörperoberflächen.
Als Beschichtungen bevorzugt sind Schutzanstriche, Versiegelungen, Schutzbeschichtungen und Primer-Beschichtungen. Unter den Belägen sind besonders Bodenbeläge als bevorzugt zu nennen. Solche Beläge werden hergestellt, indem typischerweise eine reaktive Zusammensetzung auf den Untergrund gegossen und egalisiert wird, wo sie zu einem Bodenbelag aushärtet. Beispielsweise werden solche Bodenbeläge für Büros, Wohnbereiche, Spitäler, Schulen, Lagerhallen, Parkgaragen und andere private oder industrielle Anwendungen verwendet. Da diese Anwendungen grossflächig erfolgen, kann schon eine geringfügige Freisetzung von Substanzen aus dem Belag zu arbeitshygienischen Schwierigkeiten und / oder Geruchsbelästigungen führen, selbst wenn es sich um eine Anwendung im Aussenbereich handelt. Allerdings wird ein Grossteil der Bodenbeläge im Innenbereich appliziert, weshalb auf eine geringe Geruchsbildung hier besonderes Gewicht gelegt wird.
Die Polyurethanzusammensetzung wird mit der Oberfläche eines beliebigen Untergrundes zumindest partiell kontaktiert. Bevorzugt ist eine gleichmässige Kontaktierung in Form eines Dicht- oder Klebstoffes, einer Beschichtung oder eines Belages, und zwar in den Bereichen, welche für den Einsatz eine Verbindung in Form einer Verklebung oder Abdichtung benötigen oder aber deren Untergrund abgedeckt sein soll. Es kann durchaus nötig sein, dass der Untergrund bzw. der zu kontaktierende Artikel im Vorfeld des Kontaktierens einer physikalischen und / oder chemischen Vorbehandlung unterzogen werden muss, beispielsweise durch Schleifen, Sandstrahlen, Bürsten oder dergleichen, oder durch Behandeln mit Reinigern, Lösemitteln, Haftvermittlern, Haftvermittlerlösungen oder Primern, oder dem Aufbringen einer Haftbrücke oder eines Sealers.

### Beispiele

Alle Prozent-Angaben beziehen sich, wo nicht anders angegeben, auf Gewichts-Prozente.

### Verwendete Polyamine

alpha, omega-Polyoxypropylendiamin (Jeffamine® D-230, Huntsman): Totaler Gehalt an primären Aminen ≥ 97%; Amin-Gehalt = 8.22 mmol NH₂/g.
1,3-Xylylendiamin (MXDA; Mitsubishi Gas Chemical): Gehalt MXDA ≥ 99%; Amin-Gehalt = 14.56 mmol NH₂/g.

### Verwendete Polyole

Acclaim® 4200 N (Bayer): Lineares Polypropylenoxid-Polyol mit theoretischer OH-Funktionalität 2, mittlerem Molekulargewicht ca. 4000, OH-Zahl ca. 28 mg KOH/g, Ungesättigtheitsgrad ca. 0.005 mEq/g.

Caradol® MD34-02 (Shell): Nichtlineares Polypropylenoxidpolyethylenoxid-Polyol, Ethylenoxid-terminiert, mit theoretischer OH-Funktionalität 3, mittlerem Molekulargewicht ca. 4900, OH-Zahl ca. 35 mg KOH/g, Ungesättigtheitsgrad ca. 0.08 mEq/g.

### Beschreibung der Prüfmethoden

Die **Offenzeit,** d.h. die maximal mögliche Zeit, in der der Klebstoff nach seiner Applikation noch bearbeitet - etwa durch Verstreichen oder Andrücken einer zu verklebenden Festkörperoberfläche oder eines Artikels - werden kann, wurde anhand von zwei Kriterien bestimmt, nämlich Konsistenz und Haftung, und zwar wie folgt. Der Klebstoff wurde in Form einer Dreiecksraupe von ca. 1 cm Breite auf eine LDPE-Folie aufgetragen und dann die Raupe in regelmässigen zeitlichen Abständen mit je einem Glasplättchen, das vor Gebrauch mit Sika® Aktivator (erhältlich bei Sika Schweiz AG) vorbehandelt und während 10 Minuten abgelüftet wurde, belegt. Dann wurde das Glasplättchen mittels einer Zugmaschine (Zwick) unverzüglich auf eine Klebe-Dicke von 5 mm gepresst und mit der zwischen Raupenapplikation und Einpressen des Plättchens vergangenen Zeit beschriftet. Die für das Verpressen notwendige Kraft wurde aufgenommen. Sobald die Verpresskraft 3N überstieg, wurde die Offenzeit als beendet erklärt. Zusätzlich wurde an den Prüfkörpern, welche innerhalb der Offenzeit verpresst wurden, die Haftung der Klebstoffraupe geprüft, indem die Prüfkörper während einem Tag bei 23 °C und 50% relativer Luftfeuchtigkeit ausgehärtet wurden und anschliessend der Klebstoff vom Glas abgezogen wurde. Das letzte der Glasplättchen, das noch ein vollständig kohäsives Haftungsbild zeigte, gab die Offenzeit an. Die kürzere der beiden bestimmten Offenzeiten ist jeweils aufgeführt.

Die **Frühfestigkeit** wurde wie folgt bestimmt. Pro Prüfung wurden zwei Glasplättchen der Dimension 40 x 100 x 6 mm auf der zu verklebenden Seite mit Sika® Aktivator (erhältlich bei Sika Schweiz AG) vorbehandelt. Nach einer Ablüftezeit von 10 Minuten wurde der Klebstoff in Form einer Dreiecksraupe parallel zur Längskante auf einem der Glasplättchen aufgetragen. Nach ca. einer Minute wurde der applizierte Klebstoff unter Verwendung des zweiten Glasplättchens mittels einer Zugmaschine (Zwick) auf 5 mm Kleb-Dicke verpresst (entsprechend einer Verklebungsbreite von ca. 1 cm), dann bei 23 °C und 50% relativer Luftfeuchtigkeit gelagert. Auf diese Weise wurden 5 mal 3 Prüflinge hergestellt, wobei nach verschiedenen Zeitintervallen, abhängig von der Aushärtungsgeschwindigkeit der Zusammensetzung, jeweils drei der verklebten Glasplättchen mit einer Zuggeschwindigkeit von 200 mm/min auseinandergezogen und die maximale Kraft hierfür in N/mm Raupenlänge registriert und über die drei Proben gemittelt wurde. Für jede Zusammensetzung wurde die Frühfestigkeit also nach mehreren Aushärtezeiten bestimmt.

Die **Zeit bis** zur Erreichung von **1 MPa Zugfestigkeit** ist ebenfalls ein Mass für die Frühfestigkeit. Sie wurde bestimmt mittels der wie zuvor beschriebenen Zugprüfung. Dazu wurde ein Diagramm Zugfestigkeit vs Aushärtezeit erstellt, woraus die Zeit bis zur Erreichung einer Zugfestigkeit von 100 N/cm (entspricht 1 MPa Festigkeit bei einer Verklebungsbreite von 1 cm) abgelesen wurde.

Die **Zugfestigkeit** und die **Bruchdehnung** wurden bestimmt an während 7 Tagen bei 23 °C und 50% relativer Luftfeuchtigkeit ausgehärteten Filmen mit einer Schichtdicke von 2 mm nach DIN EN 53504 (Zuggeschwindigkeit: 200 mm/min).

Die **Shore A**-Härte wurde bestimmt nach DIN 53505.

Die **Blasenbildung** wurde qualitativ beurteilt anhand der Menge Blasen, die während der Aushärtung der für die mechanischen Prüfungen (Zugfestigkeit und Bruchdehnung) verwendeten Filme auftraten.

Der **Geruch** der Zusammensetzungen wurde beurteilt durch Riechen mit der Nase in einem Abstand von 10 cm an den für die mechanischen Prüfungen (Zugfestigkeit und Bruchdehnung) verwendeten Filmen eine Stunde nach deren Applikation bei 23 °C und 50% relativer Luftfeuchtigkeit.

Die **Viskosität** wurde bei 20 °C auf einem Kegel-Platten-Viskosimeter der Fa. Haake (PK100 / VT-500) gemessen.

### a) Herstellung der Polyaldimine

### Polyaldimin PA1

In einen Rundkolben mit Rückflusskühler und Wasserabscheider (Dean Stark) wurden 40.5 g Formaldehyd (37% in Wasser, methanolfrei), 36.0 g Isobutyraldehyd, 100.0 g Laurinsäure und 1.0 g 4-Toluolsulfonsäure eingewogen und unter Stickstoffatmosphäre gestellt. Die Mischung wurde im Ölbad unter kräftigem Rühren erwärmt, worauf sich Wasser abzuscheiden begann. Nach vier Stunden wurde die Apparatur im Wasserstrahlvakuum evakuiert. Es sammelten sich insgesamt rund 35 mL Destillat im Abscheider. Das Reaktionsgemisch wurde abgekühlt, und aus einem Eintropftrichter wurden 48.6 g Jeffamine® D-230 zugegeben. Danach wurden die flüchtigen Bestandteile im Vakuum vollständig abdestilliert. Das so erhaltene, bei Raumtemperatur flüssige Reaktionsprodukt wies einen Aldimin-Gehalt, bestimmt als Amin-Gehalt, von 2.17 mmol NH₂/g, eine Viskosität bei 20 °C von 700 mPa·s und keinen wahrnehmbaren Geruch auf.

### Polyaldimin PA2

Wie für Polyaldimin PA1 beschrieben wurden 40.5 g Formaldehyd (37% in Wasser, methanolfrei), 36.0 g Isobutyraldehyd, 100.0 g Laurinsäure und 1.0 g 4-Toluolsulfonsäure unter Abscheidung von 35 mL Wasser umgesetzt und das dabei erhaltene Reaktionsgemisch mit 26.0 g MXDA versetzt. Nach Entfernen der flüchtigen Bestandteile im Vakuum erhielt man ein bei Raumtemperatur flüssiges Reaktionsprodukt, das einen Aldimin-Gehalt, bestimmt als Amin-Gehalt, von 2.33 mmol NH₂/g und keinen wahrnehmbaren Geruch aufwies.

### Polyaldimin PA3

In einen Rundkolben wurden 50.0 g fein gepulverter 3-Hydroxypivalaldehyd (in dimerer Form) in 100 mL Wasser suspendiert, unter Stickstoffatmosphäre gestellt und im Ölbad auf 60 °C erwärmt. Aus einem Tropftrichter wurden innerhalb von 30 Minuten 59.6 g Jeffamine® D-230 zugetropft, worauf eine klare blassgelbe Lösung erhalten wurde. Danach wurden die flüchtigen Bestandteile im Vakuum vollständig abdestilliert. Das so erhaltene blassgelbe, bei Raumtemperatur flüssige Reaktionsprodukt wies einen Aldimin-Gehalt, bestimmt als Amin-Gehalt, von 4.86 mmol NH₂/g auf und hatte einen schwachen Amin-Geruch.

### Polyaldimin PA4

In einen Rundkolben wurden 16.3 g Glucose-Monohydrat in 50 mL Wasser gelöst, mit 0.05 g p-Toluolsulfonsäure versetzt und unter Stickstoffatmosphäre gestellt. Aus einem Tropftrichter wurden 10.0 g Jeffamine® D-230 zugetropft, worauf eine klare blassgelbe Lösung erhalten wurde. Danach wurden die flüchtigen Bestandteile im Vakuum vollständig abdestilliert. Das so erhaltene gelbbraune, bei Raumtemperatur zähflüssige Reaktionsprodukt wies einen Aldimin-Gehalt, bestimmt als Amin-Gehalt, von 3.52 mmol NH₂/g und keinen wahrnehmbaren Geruch auf.

### Polyaldimin PA5

In einen Rundkolben wurden 25.0 g fein gemahlenes 4-Dimethylamino-benzaldehyd in 100 mL Ethanol suspendiert und unter Stickstoffatmosphäre gestellt. Aus einem Tropftrichter wurden langsam 19.4 g Jeffamine® D-230 zugetropft, worauf eine klare gelbe Lösung erhalten wurde. Danach wurden die flüchtigen Bestandteile im Vakuum vollständig abdestilliert. Das so erhaltene dunkelgelbe, bei Raumtemperatur zähflüssige Reaktionsprodukt wies einen Aldimin-Gehalt, bestimmt als Amin-Gehalt, von 3.84 mmol NH₂/g auf und hatte einen schwach aromatischen Geruch.

### Polyaldimin PA6

Wie für Polyaldimin PA5 beschrieben wurden 25.0 g 3,4,5-Trimethoxybenzaldehyd mit 14.8 g Jeffamine® D-230 umgesetzt. Nach Entfernen der flüchtigen Bestandteile im Vakuum erhielt man ein gelbes, bei Raumtemperatur zähflüssiges Reaktionsprodukt, das einen Aldimin-Gehalt, bestimmt als Amin-Gehalt, von 3.23 mmol NH₂/g aufwies und einen schwach aromatischen Geruch hatte.

### Polyaldimin PA7 (Vergleich)

In einem Rundkolben wurden 50.0 g Jeffamine® D-230 vorgelegt und unter Stickstoffatmosphäre gestellt. Unter guter Kühlung und kräftigem Rühren wurden aus einem Eintropftrichter 32.6 g Isobutyraldehyd zugegeben. Darauf wurden die flüchtigen Bestandteile im Vakuum vollständig abdestilliert. Das so erhaltene, bei Raumtemperatur flüssige Reaktionsprodukt wies einen Aldimin-Gehalt, bestimmt als Amin-Gehalt, von 5.81 mmol NH₂/g auf und hatte einen starken Aldehyd-Geruch.

### b) Herstellung der ersten Komponente A

### Beispiel 1 (Komp. A)

In einem Vakuummischer wurden 3400 g eines Polyurethanprepolymers **A1,** dessen Herstellung nachfolgend beschrieben ist, 1402 g Diisodecylphthalat (DIDP), 14 g p-Tolylsulfonylisocyanat (Zusatzmittel TI®, Bayer), 21 g 3-Glycidoxypropyltrimethoxysilan (Silquest® A-187, OSi Crompton), 1052 g calciniertes Kaolin, 1052 g Russ und 7 g Di-n-butyl-zinndichlorid (1.8% in DIDP) unter Feuchtigkeitsausschluss zu einer knollenfreien, homogenen Paste verarbeitet und unter Ausschluss von Feuchtigkeit aufbewahrt. Das Material wies einen Gehalt an Isocyanatgruppen von 0.241 mmol NCO/g und eine Dichte von 1.23 g / cm³ auf.

Nach der vollständigen Aushärtung der ersten Komponente **A** allein mittels Luftfeuchtigkeit bei 23 °C und 50% relativer Luftfeuchtigkeit wies sie eine
Shore A-Härte von 47, eine
Zugfestigkeit von 7.4 MPa und eine
Bruchdehnung von 310% auf.

Das Polyurethanprepolymer **A1** wurde wie folgt hergestellt:
1290 g Polyol Acclaim® 4200 N, 2580 g Polyol Caradol® MD34-02, 630 g 4,4'-Methylendiphenyldiisocyanat (MDI; Desmodur® 44 MC L, Bayer) und 500 g DIDP wurden nach bekanntem Verfahren bei 80 °C zu einem NCOterminierten Polyurethanprepolymeren umgesetzt. Das Reaktionsprodukt hatte einen titrimetrisch bestimmten Gehalt an freien Isocyanat-Gruppen von 2.07 Gewichts-% und eine Viskosität bei 20 °C von 56 Pa·s.

### c) Herstellung der zweiten Komponenten B

### Beispiele 2 bis 17 (Komp. B)

In einem Vakuummischer wurden die in Tabelle 2a und 2b angegebenen Komponenten unter Feuchtigkeitsausschluss vermischt und zu einer knollenfreien homogenen Paste verarbeitet, welche unter Ausschluss von Feuchtigkeit aufbewahrt wurde.
Die Dichte der Komponenten **B** nach den Beispielen 2 bis 17 entsprach jener der Komponente **A** nach Beispiel 1, ausser für die Beispiele 5 und 14.
In der Tabelle 2a und 2b steht "DIDP" für Diisodecylphthalat, "DOA" für Dioctyladipat und "Kaolin" für ein calciniertes Kaolin. "Zinn-Kat." steht für eine Lösung von 1.8% Di-n-butyl-zinndichlorid in DIDP.
"Ketimin" in Tabelle 2b und in Tabelle 7 bezeichnet das Polyketimin aus 3,3,5-Trimethyl-5-aminomethylcyclohexylamin (IPDA) und Methylethylketon. Es wurde hergestellt wie in US 4,108,842 als "Hardener 1" beschrieben. Es wies einen Ketimin-Gehalt, bestimmt als Amin-Gehalt, von 3.37 mmol NH₂/g auf und hatte einen intensiven stechenden Lösemittel-Geruch.

**Tabelle 2a:**

| Zusammensetzung in Gewichtsteilen der zweiten Komponenten **B** | | | | | | | | |
|---|---|---|---|---|---|---|---|---|
| **Beispiel** | **2** | **3** | **4** | **5** | **6** | **7** | **8** | **9** |
| PA1 | 44.5 | 55.6 | 66.7 | 95.1 | 66.7 | 66.7 | - | - |
| PA2 | - | - | - | - | - | - | 62.1 | - |
| PA3 | - | - | - | - | - | - | - | 29.8 |
| Salicylsäure | 0.3 | 0.3 | 0.3 | 0.4 | 0.3 | 0.3 | 0.3 | - |
| Wasser | 3.0 | 3.3 | 3.5 | 4.5 | 2.6 | 4.3 | 3.5 | 3.5 |
| DIDP | 22.0 | 10.6 | - | - | 0.2 | - | 3.9 | 36.5 |
| pyrogene Kieselsäure | 2.0 | 2.0 | 2.0 | - | 2.0 | 2.0 | 2.0 | 2.0 |
| Kaolin | 28.2 | 28.2 | 27.5 | - | 28.2 | 26.7 | 28.2 | 28.2 |

**Tabelle 2b:**

| Fortsetzung von Tabelle 2a | | | | | | | | |
|---|---|---|---|---|---|---|---|---|
| **Beispiel** | **10** | **11** | **12** | **13** | **14 Ref.*** | **15 Ref.*** | **16 Ref.*** | **17 Ref.*.** |
| PA1 | - | - | - | 76.6 | - | - | - | - |
| PA4 | 41.1 | - | - | - | - | - | - | - |
| PA5 | - | 37.7 | - | - | - | - | - | - |
| PA6 | - | - | 44.8 | - | - | - | - | - |
| PA7 | - | - | - | - | 27.9 | - | - | - |
| Ketimin | - | - | - | - | - | 42.9 | - | - |
| Dipropylenglykol | - | - | - | 7.4 | - | - | - | 9.7 |
| Salicylsäure | 0.3 | 1.0 | 1.0 | 0.3 | 0.2 | 0.2 | - | - |
| Wasser | 3.5 | 3.5 | 3.5 | 3.0 | 3.5 | 3.5 | 4.3 | - |
| DIDP | - | 27.6 | 20.5 | - | 38.2 | 23.2 | 65.5 | 59.1 |
| DOA | 24.9 | - | - | - | - | - | - | - |
| pyrogene Kieselsäure | 2.0 | 2.0 | 2.0 | 12.7 | 2.0 | 2.0 | 2.0 | 2.0 |
| Kaolin | 28.2 | 28.2 | 28.2 | - | 28.2 | 28.2 | 28.2 | 28.2 |
| Zinn-Kat. | - | - | - | - | - | - | - | 1.0 |

| | | | | | | | | |
|---|---|---|---|---|---|---|---|---|
| * Ref. = Vergleich | | | | | | | | |

### d) Herstellung und Prüfung der ausgehärteten Zusammensetzungen

Zur Herstellung von ausgehärteten Zusammensetzungen wurde die erste Komponente **A** nach Beispiel 1 mit der jeweiligen zweiten Komponente **B** im Volumenverhältnis 10:1 vermischt.
Das Mischen der beiden Komponenten **A** und **B** erfolgte kontinuierlich während der Applikation, indem die beiden Komponenten aus einer Zweikomponenten-Polyethylen-Koaxial-Kartusche 1:10 der Firma Mixpak mit aufgesetztem Statikmischer, Typ Sulzer Quadro mit 24 Mischelementen, appliziert wurden. Für Beispiel 19 (zweite Komponente **B** nach Beispiel 5) wurden 36 Mischelemente verwendet, da die zweite Komponente **B** nach Beispiel 5 keine Füllstoffe enthielt und daher schwieriger in die erste Komponente **A** einzumischen war.

**Tabelle 3:**

| **Beispiele 18 bis 21** | | | | |
|---|---|---|---|---|
| **Beispiel** | **18** | **19** | **20** | **21** |
| Komp. **A** gemäss | Bsp. 1 | Bsp. 1 | Bsp. 1 | Bsp. 1 |
| Komp. **B** gemäss | Bsp. 2 | Bsp. 3 | Bsp. 4 | Bsp. 5 |
| Polyaldimin in der Komp. **B** | PA1 | PA1 | PA1 | PA1 |
| NH₂/ NCO | 0.4 | 0.5 | 0.6 | 0.7 |
| H₂O/ NCO | 0.70 ^{a)} | 0.75 ^{a)} | 0.80 ^{a)} | 0.85 ^{a)} |
| Offenzeit (Min.) | 40 | 35 | 25 | 10 |
| Frühfestigkeit nach 180 Min. (N/cm) | 9 | 17 | 78 | 120 |
| Zeit bis 1 MPa Zugfestigkeit (Min.) | 360 | 300 | 200 | 160 |
| Zugfestigkeit (MPa) | 6.5 | 6.7 | 6.4 | 6.8 |
| Bruchdehnung (%) | 430 | 460 | 460 | 480 |
| Shore A | 46 | 44 | 44 | 45 |
| Blasenbildung | keine | keine | keine | keine |
| Geruch | keiner | keiner | keiner | keiner |

| | | | | |
|---|---|---|---|---|
| ^{a)} genau die zur vollständigen Aushärtung der Komp. **A** erforderliche Wassermenge nach der früher definierten Formel (X) ist vorhanden. | | | | |

Die Beispiele 18 bis 21 weisen unterschiedliche Mengen Polyaldimin PA1 auf. Das Verhältnis NH₂/NCO (d.h. Equivalente Aldimingruppen der zweiten Komponente **B** pro Equivalent Isocyanatgruppen der ersten Komponente **A)** variiert von 0.4/1 bis 0.7/1. Die Menge Wasser in diesen Mischungen, angegeben als H₂O/NCO (d.h. mol Wasser pro Equivalent Isocyanatgruppen) ist jeweils so dosiert, dass das Wasser genau ausreicht, um das Polyaldimin vollständig zu hydrolysieren und die restlichen Isocyanatgruppen des Polyurethanprepolymers auszuhärten.
Mit steigendem Gehalt an Polyaldimin steigt auch die Frühfestigkeit stark an, während die Zeit zur Erreichung von 1 MPa Zugfestigkeit entsprechend abnimmt. Die Offenzeit nimmt ebenfalls ab. Die mechanischen Eigenschaften der ausgehärteten Zusammensetzungen, Zugfestigkeit und Bruchdehnung, zeigen trotz unterschiedlichem Gehalt an Polyaldimin nur klei-

**Tabelle 4:**

| **Beispiele 22 und 23** im Vergleich mit Beispiel 20 | | | |
|---|---|---|---|
| **Beispiel** | **22** | **20** | **23** |
| Komp. **A** gemäss | Bsp. 1 | Bsp. 1 | Bsp. 1 |
| Komp. **B** gemäss | Bsp. 6 | Bsp. 4 | Bsp. 7 |
| Polyaldimin in der Komp. **B** | PA1 | PA1 | PA1 |
| NH₂/ NCO | 0.6 | 0.6 | 0.6 |
| H₂O/NCO | 0.6 ^{b)} | 0.8 ^{a)} | 1.0^{c)} |
| Offenzeit (Min.) | 40 | 25 | 10 |
| Frühfestigkeit nach 180 Min. (N/cm) | 34 | 78 | 150 |
| Zeit bis 1 MPa Zugfestigkeit (Min.) | 450 | 200 | 140 |
| Zugfestigkeit (MPa) | 6.2 | 6.4 | 6.4 |
| Bruchdehnung (%) | 450 | 460 | 420 |
| Shore A | 44 | 44 | 45 |
| Blasenbildung | keine | keine | keine |
| Geruch | keiner | keiner | keiner |

| | | | |
|---|---|---|---|
| ^{a)} genau die zur vollständigen Aushärtung der Komp. **A** erforderliche Wassermenge nach der früher definierten Formel (X) ist vorhanden. | | | |
| ^{b)} nur die zur Hydrolyse des Polyaldimins notwendige Wassermenge ist vorhanden, die restlichen NCO-Gruppen brauchen Feuchtigkeit aus der Luft zur Aushärtung. | | | |
| ^{c)} es ist mehr Wasser vorhanden, als zur vollständigen Aushärtung der Komp. **A** notwendig wären. | | | |

ne Unterschiede. Bei der Aushärtung aller vier Beispiele treten weder Blasen noch ein wahrnehmbarer Geruch auf.

Die Beispiele 20, 22 und 23 weisen einen konstanten Gehalt an Polyaldimin PA1, aber unterschiedliche Mengen Wasser auf. Dabei ist ersichtlich, dass eine Erhöhung des Wassergehaltes eine Beschleunigung bewirkt, sowohl bei der Offenzeit als auch bei der Frühfestigkeit und der Zeit zur Erreichung von 1 MPa Zugfestigkeit. Die Zugfestigkeit und die Bruchdehnung zeigen kaum Unterschiede. Bei der Aushärtung aller drei Beispiele treten weder Blasen noch ein wahrnehmbarer Geruch auf.

**Tabelle 5:**

| **Beispiel 24** im Vergleich mit Beispiel 20 | | |
|---|---|---|
| **Beispiel** | **20** | **24** |
| Komp. **A** gemäss | Bsp. 1 | Bsp. 1 |
| Komp. **B** gemäss | Bsp. 4 | Bsp. 8 |
| Polyaldimin in der Komp. **B** | PA1 | PA2 |
| NH₂/ NCO | 0.6 | 0.6 |
| H₂O / NCO | 0.8 | 0.8 |
| Offenzeit (Min.) | 25 | 20 |
| Frühfestigkeit nach 120 Min. (N/cm) | 40 | 230 |
| Frühfestigkeit nach 180 Min. (N/cm) | 78 | n.b. |
| Zeit bis 1 MPa Zugfestigkeit (Min.) | 200 | 85 |
| Zugfestigkeit (MPa) | 6.4 | 6.2 |
| Bruchdehnung (%) | 460 | 400 |
| Shore A | 44 | 52 |
| Blasenbildung | keine | keine |
| Geruch | keiner | keiner |
| "n.b." steht für "nicht bestimmt" | | |

Beispiel 24 unterscheidet sich von Beispiel 20 durch das verwendete Polyaldimin, wobei jeweils derselbe Aldehyd mit zwei verschiedenen Polyaminen umgesetzt worden war. Die unterschiedlichen Amine hatten zwar keinen grossen Einfluss auf die mechanischen Eigenschaften des Endproduktes, umso mehr jedoch auf die Entwicklung der Frühfestigkeit: Bei ähnlicher Offenzeit baut sich die Frühfestigkeit in Beispiel 24 wesentlich schneller auf als in Beispiel 20. Beide Beispiele weisen weder Blasen bei der Aushärtung noch einen wahrnehmbaren Geruch auf.

**Tabelle 6:**

| **Beispiele 25 bis 29** im Vergleich mit Beispiel 20 | | | | | | |
|---|---|---|---|---|---|---|
| **Beispiel** | **20** | **25** | **26** | **27** | **28** | **29** |
| Komp. **A** gemäss | Bsp. 1 | Bsp. 1 | Bsp. 1 | Bsp. 1 | Bsp. 1 | Bsp.1 |
| Komp. **B** gemäss | Bsp. 4 | Bsp.9 | Bsp.10 | Bsp.11 | Bsp.12 | Bsp. 13 |
| Polyaldimin in der Komp. **B** | PA1 | PA3 | PA4 | PA5 | PA6 | PA1 |
| NH₂ / NCO | 0.6 | 0.6 | 0.6 | 0.6 | 0.6 | 0.6 |
| H₂O/ NCO | 0.8 | 0.8 | 0.8 | 0.8 | 0.8 | 0.6 |
| Offenzeit (Min.) | 25 | 5 | 50 | 10 | 15 | 20 |
| Frühfestigkeit nach 120 Min. (N/cm) | 40 | n.b. | 35 | n:b. | 170 | 45 |
| Frühfestigkeit nach 180 Min. (N/cm) | 78 | n.b. | 140 | n.b. | n.b. | n.b. |
| Zeit bis 1 MPa Zugfestigkeit (Min.) | 200 | 20 | 170 | 20 | 80 | 180 |
| Zugfestigkeit (MPa) | 6.4 | 5.3 | 5.6 | 5.2 | 5.1 | 6.1 |
| Bruchdehnung (%) | 460 | 490 | 280 | 450 | 450 | 480 |
| Shore A | 44 | 36 | 49 | 42 | 40 | 42 |
| Blasenbildung | keine | keine | keine | keine | keine | keine |
| Geruch | keiner | gering | keiner | gering | gering | keiner |
| "n.b." steht für "nicht bestimmt" | | | | | | |

Die Beispiele 25 bis 28 unterscheiden sich von Beispiel 20 durch das verwendete Polyaldimin, wobei jeweils dasselbe Polyamin mit verschiedenen Aldehyden umgesetzt worden war. Die Offenzeiten sowie die Frühfestigkeiten sind sehr unterschiedlich. Beispiel 25 ist ein sehr schnelles System. Aufgrund der OH-Gruppen am Aldehyd ist das ausgehärtete Material weicher als bei Beispiel 20, da ein Teil der Isocyanatgruppen nicht mit Luftfeuchtigkeit vernetzt, sondern mit diesen OH-Gruppen reagiert. Beispiel 26 weist eine lange Offenzeit von 50 Min. auf, ist aber bei der Entwicklung der Frühfestigkeit deutlich schneller als Beispiel 20. Dies ist für die Praxis eine interessante Kombination. Der abgespaltene Aldehyd weist mehrere OH-Gruppen auf, kann also mit einem Teil der Isocyanatgruppen reagieren und so zur Aushärtung beitragen. Beispiel 29 enthält zusätzlich zu PA1 noch Dipropylenglykol; die Eigenschaften sind ähnlich wie bei Beispiel 20.
Alle Beispiele bildeten bei der Aushärtung keine Blasen. Die Beispiele 25, 27 und 28 weisen einen geringen Geruch auf, während die andern Beispiele keinen wahrnehmbaren Geruch aufweisen.
Die Beispiele 20 bis 29 sind Beleg dafür, dass es möglich ist, ein modulares System bestehend aus einer Komponente **A** und unterschiedlichen Komponenten **B** zu erhalten, welches sich in Bezug auf Verarbeitungszeiten, Frühfestigkeiten, Aushärtegeschwindigkeiten, Geruch sowie mechanische Eigenschaften deutlich unterscheidet und damit auf die Anforderungen verschiedener Anwendungen angepasst werden kann.

Die Vergleichsbeispiele 30 (spaltet Isobutyraldehyd ab) und 31 (spaltet Methylethylketon ab) weisen beide eine sehr hohe Reaktivität auf, was zu einer unerwünscht kurzen Offenzeit führt. Der jeweilige Geruch bei der Aushärtung ist für die genannten Anwendungen nicht akzeptabel.
Das Vergleichsbeispiel 32, welches nur über Wasser in der Komponente **B** aushärtet, weist zwar eine akzeptable Reaktivität und keinen wahrnehmbaren Geruch auf, bei der Aushärtung bilden sich jedoch viele Blasen, was für die genannten Anwendungen nicht akzeptabel ist.
Das Vergleichsbeispiel 33, welches über ein Polyol aushärtet, weist zwar eine akzeptable Reaktivität, keinen Geruch und auch keine Blasen auf, die Oberfläche der ausgehärteten Zusammensetzung bleibt jedoch sehr klebrig, da aufgrund der ähnlichen Reaktivität des Wassers aus der Luftfeuchtigkeit und des Dipropylenglykols mit den Isocyanatgruppen ein Teil der Polymerketten an der Oberfläche nicht richtig aushärten (Kettenabbrüche).

**Tabelle 7:**

| **Vergleichsbeispiele 30 bis 33** | | | | |
|---|---|---|---|---|
| **Beispiel** | **30 Ref.*** | **31 Ref.*** | **32 Ref.*** | **33 Ref.*** |
| Komp. **A** gemäss | Bsp. 1 | Bsp. 1 | Bsp. 1 | Bsp. 1 |
| Komp. **B** gemäss | Bsp. 14 | Bsp. 15 | Bsp. 16 | Bsp. 17 |
| Härter in der Komp. **B** | PA 7, Wasser | Ketimin, Wasser | nur Wasser | Dipropylenglykol |
| NH₂/ NCO | 0.6/1 | 0.6/1 | - | - |
| OH / NCO | - | - | - | 0.6/1 |
| H₂O / NCO | 0.8/1 | 0.8/1 | 1/1 | - |
| Offenzeit (Min.) | 0.5 | 1.5 | 15 | 25 |
| Frühfestigkeit nach 30 Min. (N/cm) | fest | fest | n.b. | n.b. |
| Frühfestigkeit nach 120 Min. (N/cm) | n.b. | n.b. | 90 | 42 |
| Zeit bis 1 MPa Zugfestigkeit (Min.) | 8 | 25 | 125 | 210 |
| Zugfestigkeit (MPa) | 6.5 | 7.2 | 7.2 | 5.5* |
| Bruchdehnung (%) | 440 | 400 | 330 | 500* |
| Shore A | 44 | 47 | 46 | 35* |
| Blasenbildung | keine | keine | sehr viele | keine |
| Geruch | sehr stark | sehr stark | keiner | keiner |

| | | | | |
|---|---|---|---|---|
| "n.b." steht für "nicht bestimmt", "Ref." steht für "Vergleich" * Die ausgehärtete Zusammensetzung weist eine sehr klebrige Oberfläche auf. | | | | |

## Patentansprüche

1. Zweikomponentige Polyurethanzusammensetzung bestehend aus einer ersten Komponente **A** umfassend
mindestens ein Polyurethanprepolymer **A1** mit Isocyanatendgruppen, hergestellt aus mindestens einem Polyisocyanat und mindestens einem Polyol
und einer zweiten Komponente **B** umfassend
Wasser
sowie mindestens ein Polyaldimin **B1,** welches erhältlich ist aus mindestens einem Polyamin **PA** mit aliphatischen primären Aminogruppen und mindestens einem geruchsarmen Aldehyd **ALD** nach Formel (I) oder Formel (II), 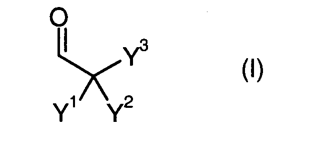 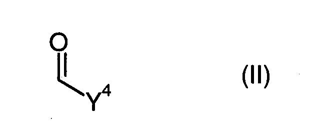 wobei Y¹ und Y²
entweder
unabhängig voneinander ein Wasserstoffatom, eine Hydroxylgruppe oder einen organischen Rest darstellen;
oder
zusammen einen carbocyclischen oder heterocyclischen Ring darstellen, welcher eine Ringgrösse zwischen 5 und 8, bevorzugt 6, Atomen aufweist;
und Y³
entweder
für eine substituierte oder unsubstituierte Alkylgruppe steht, welche mindestens ein Heteroatom aufweist;
oder
für eine verzweigte oder unverzweigte Alkyl- oder Alkylengruppe mit mindestens 10 C-Atomen steht;
oder
für eine substituierte oder unsubstituierte Aryl- oder Arylalkylgruppe steht;
oder
für O-R¹ oder 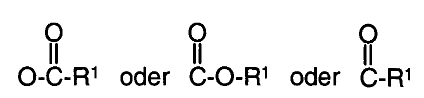 steht, wobei R¹ für eine Aryl- , Arylalkyl- oder Alkylgruppe mit mindestens 3 C-Atomen steht und jeweils substituiert oder unsubstituiert ist;
und Y⁴
entweder
für eine substituierte oder unsubstituierte Aryl- oder Heteroaryl-Gruppe steht, welche / eine Ringgrösse zwischen 5 und 8, bevorzugt 6, Atomen aufweist;
oder
für 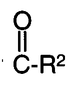 steht, mit R² = Alkyl, Hydroxyl oder Alkoxy;
oder
für eine substituierte oder unsubstituierte Alkenyl- oder Arylalkenylgruppe mit mindestens 6 C-Atomen steht.

2. Zweikomponentige Polyurethanzusammensetzung gemäss Anspruch 1, **dadurch gekennzeichnet, dass** das Heteroatom in Y³ in Form eines Ether-Sauerstoffs, einer Carboxyl-, einer Ester- oder einer Hydroxylgruppe vorliegt.

3. Zweikomponentige Polyurethanzusammensetzung gemäss Anspruch 1 oder 2, **dadurch gekennzeichnet, dass** der Aldehyd **ALD** die Formel (III) aufweist, 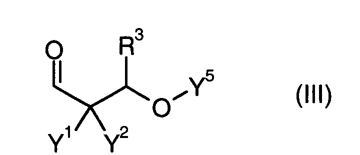 wobei R³ und Y⁵ unabhängig voneinander für ein Wasserstoffatom oder für eine Alkyl- oder Arylalkylgruppe stehen.

4. Zweikomponentige Polyurethanzusammensetzung gemäss Anspruch 1 oder 2, **dadurch gekennzeichnet, dass** der Aldehyd **ALD** die Formel (IV) aufweist, 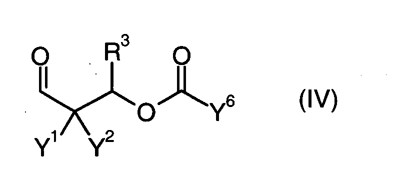 wobei
R³ für ein Wasserstoffatom oder für eine Alkyl- oder Arylalkylgruppe steht; und Y⁶
entweder
ein Wasserstoffatom darstellt;
oder
eine Alkyl- oder Arylalkyl- oder Arylgruppe darstellt, welche gegebenenfalls mindestens ein Heteroatom aufweist, gegebenenfalls mindestens eine Carboxylgruppe enthält und gegebenenfalls mindestens eine Estergruppe enthält;
oder
eine einfach oder mehrfach ungesättigte, lineare oder verzweigte Kohlenwasserstoffkette darstellt.

5. Zweikomponentige Polyurethanzusammensetzung gemäss Anspruch 4, **dadurch gekennzeichnet, dass** R³ für ein Wasserstoffatom steht, sowie
Y⁶
entweder
für eine lineare oder verzweigte Alkylkette mit 11 bis 30 Kohlenstoff-Atomen, gegebenenfalls mit mindestens einem Heteroatom, insbesondere mit mindestens einem Ether-Sauerstoff, steht;
oder
für eine einfach oder mehrfach ungesättigte lineare oder verzweigte Kohlenwasserstoffkette mit 11 bis 30 Kohlenstoff-Atomen steht;
oder
für einen Rest der Formel (V) oder (Vl) steht, 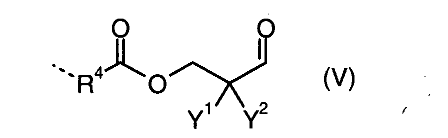 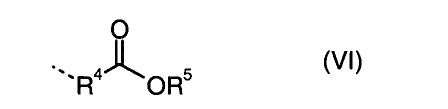 wobei
R⁴ entweder
für eine, lineare oder verzweigte oder cyclische, Alkylenkette mit 2 bis 16 Kohlenstoff-Atomen, gegebenenfalls mit mindestens einem Heteroatom, insbesondere mit mindestens einem Ether-Sauerstoff, steht;
oder
für eine einfach oder mehrfach ungesättigte, lineare oder verzweigte oder cyclische, Kohlenwasserstoffkette mit 2 bis 16 Kohlenstoff-Atomen steht;
und
R⁵ für eine lineare oder verzweigte Alkylkette mit 1 bis 8 Kohlenstoff-Atomen steht.

6. Zweikomponentige Polyurethanzusammensetzung gemäss einem der Ansprüche 4 oder 5, **dadurch gekennzeichnet, dass** der für die Herstellung des Polyaldimins verwendete Aldehyd **ALD** durch eine Veresterungsreaktion eines β-Hydroxyaldehyds mit einer Carbonsäure erhältlich ist, insbesondere ohne Verwendung eines Lösemittels, wobei der β-Hydroxyaldehyd gegebenenfalls in situ aus Formaldehyd, beziehungsweise Paraformaldehyd, und einem zweiten Aldehyd hergestellt wird.

7. Zweikomponentige Polyurethanzusammensetzung gemäss Anspruch 6,
**dadurch gekennzeichnet, dass** der für die Herstellung des Polyaldimins verwendete Aldehyd **ALD** durch eine Veresterungsreaktion von 3-Hydroxypivalaldehyd mit einer Carbonsäure erhältlich ist, insbesondere ohne Verwendung eines Lösemittels, wobei 3-Hydroxypivalaldehyd gegebenenfalls in situ aus Formaldehyd, beziehungsweise Paraformaldehyd, und Isobutyraldehyd hergestellt wird.

8. Zweikomponentige Polyurethanzusammensetzung gemäss Anspruch 6 oder 7, **dadurch gekennzeichnet, dass** die für die Herstellung des Aldehyds **ALD** verwendete Carbonsäure ausgewählt ist aus der Gruppe umfassend Laurinsäure, Myristinsäure, Palmitinsäure, Stearinsäure, Ölsäure, Linolsäure, Linolensäure, Bernsteinsäure, Adipinsäure, Azelainsäure und Sebacinsäure, deren Gemische sowie deren technische Gemische mit Fettsäuren.

9. Zweikomponentige Polyurethanzusammensetzung gemäss einem der vorhergehenden Ansprüche, **dadurch gekennzeichnet, dass** Y¹ = Y² = Methyl ist.

10. Zweikomponentige Polyurethanzusammensetzung gemäss Anspruch 1 oder 2, **dadurch gekennzeichnet, dass** der Aldehyd **ALD** die Formel (I) aufweist und Y¹ für eine Hydroxylgruppe steht, Y² für ein Wasserstoffatom steht und Y³ für eine Alkylgruppe mit mindestens einer Hydroxylgruppe, insbesondere mit mehr als einer Hydroxylgruppe, steht.

11. Zweikomponentige Polyurethanzusammensetzung gemäss einem der vorhergehenden Ansprüche, **dadurch gekennzeichnet, dass** das Polyamin **PA** mit aliphatischen primären Aminogruppen ausgewählt ist aus der Gruppe bestehend aus 1,6-Hexamethylendiamin, MPMD, DAMP, 2,2,4- und 2,4,4-Trimethylhexamethylendiamin, 4-Aminomethyl-1,8-octandiamin, IPDA, 1,3- und 1,4-Xylylendiamin, 1,3- und 1,4-Bis-(aminomethyl)cyclohexan, Bis-(4-aminocyclohexyl)-methan, Bis-(4-amino-3-methylcyclohexyl)-methan, 3(4),8(9)-Bis-(aminomethyl)-tricyclo[5.2.1.0^{2,6}]-decan, 1,2-, 1,3- und 1,4-Diaminocyclohexan, 1,4-Diamino-2,2,6-trimethylcyclohexan, Polyoxyalkylen-Polyamine mit theoretisch zwei oder drei Aminogruppen, insbesondere Jeffamine® EDR-148, Jeffamine® D-230, Jeffamine® D-400 und Jeffamine® T-403, sowie Mischungen von zwei oder mehr der vorgenannten Polyamine.

12. Zweikomponentige Polyurethanzusammensetzung gemäss einem der vorhergehenden Ansprüche, **dadurch gekennzeichnet, dass** für die Herstellung des Polyaldimins **B1** der Aldehyd **ALD** stöchiometrisch oder im stöchiometrischen Überschuss in Bezug auf die primären Aminogruppen des Polyamins **PA** eingesetzt wird.

13. Zweikomponentige Polyurethanzusammensetzung gemäss einem der vorhergehenden Ansprüche, **dadurch gekennzeichnet, dass** das Wasser in der zweiten Komponente **B** in freier Form oder reversibel an ein Trägermaterial gebunden vorliegt.

14. Zweikomponentige Polyurethanzusammensetzung gemäss einem der vorhergehenden Ansprüche, **dadurch gekennzeichnet, dass** die zweite Komponente **B** mindestens ein Molekül Wasser pro Aldimingruppe aufweist.

15. Zweikomponentige Polyurethanzusammensetzung gemäss einem der vorhergehenden Ansprüche, **dadurch gekennzeichnet, dass** das Polyol für die Herstellung des Polyurethanprepolymers **A1** der ersten Komponente **A** eine mittlere OH-Funktionalität von 1.6 bis 3 aufweist.

16. Zweikomponentige Polyurethanzusammensetzung gemäss Anspruch 15, **dadurch gekennzeichnet, dass** das Polyol ein Polyoxyalkylenpolyol, insbesondere ein Polyoxyalkylendiol oder -triol, insbesondere ein Polyoxypropylendiol oder -triol oder ein EO-endcapped Polyoxypropylendiol oder -triol ist.

17. Zweikomponentige Polyurethanzusammensetzung gemäss Anspruch 15 oder 16, **dadurch gekennzeichnet, dass** das Polyol ein Polyoxyalkylenpolyol mit einem Ungesättigtheitsgrad <0.02 mEq/g und einem Molekulargewicht Mₙ von 1'000 bis 30'000 g/mol ist.

18. Zweikomponentige Polyurethanzusammensetzung gemäss Anspruch 17, **dadurch gekennzeichnet, dass** das Polyol ein mittels DMC-Katalyse hergestelltes Polyol ist.

19. Zweikomponentige Polyurethanzusammensetzung gemäss einem der vorhergehenden Ansprüche, **dadurch gekennzeichnet, dass** das Polyurethanprepolymer **A1** in der ersten Komponente **A** und das Polyaldimin **B1** in der zweiten Komponente **B** im Verhältnis von 0.1 bis 0.99, insbesondere von 0.4 bis 0.8 Equivalent Aldimingruppen pro Equivalent Isocyanatgruppen vorliegen.

20. Verfahren zum Mischen einer zweikomponentigen Polyurethanzusammensetzung gemäss einem der Ansprüche 1 bis 19, **dadurch gekennzeichnet, dass** die erste Komponente **A** und die zweite Komponente **B** im wesentlichen homogen gemischt werden.

21. Verfahren zum Mischen einer zweikomponentigen Polyurethanzusammensetzung gemäss einem der Ansprüche 1 bis 19, **dadurch gekennzeichnet, dass** die erste Komponente **A** und die zweite Komponente **B** im wesentlichen schichtenartig gemischt werden.

22. Verfahren zum Mischen gemäss Anspruch 20 oder 21, **dadurch gekennzeichnet, dass** das Mischen der zwei Komponenten **A** und **B** mittels eines zwei ineinander greifende Dosierrotoren enthaltenden Dosieraufsatzes, sowie gegebenenfalls zusätzlich mittels eines an der Austrittsöffnung dieses Dosieraufsatzes angebrachten Statikmischers, erfolgt.

23. Verfahren der Applikation einer zweikomponentigen Polyurethanzusammensetzung gemäss einem der Ansprüche 1 bis 19, **dadurch gekennzeichnet, dass** es die folgenden Schritte umfasst:
- Mischen der zwei Komponenten **A** und **B**
- Kontaktieren mindestens einer Festkörperoberfläche mit der gemischten Polyurethanzusammensetzung
- Aushärtung der gemischten Polyurethanzusammensetzung.

24. Verfahren der Applikation gemäss Anspruch 23, **dadurch gekennzeichnet, dass** das Kontaktieren der Festkörperoberfläche als Auftrag einer Raupe auf die Oberfläche erfolgt.

25. Verwendung einer zweikomponentigen Polyurethanzusammensetzung gemäss einem der Ansprüche 1 bis 19 als Klebstoff, Dichtstoff oder Belag, insbesondere als Klebstoff oder Dichtstoff.

26. Artikel, welcher mit einer gemischten und ausgehärteten zweikomponentigen Polyurethanzusammensetzung gemäss einem der Ansprüche 1 bis 19 kraftschlüssig verbunden ist.
